# EUROPÄISCHE PATENTSCHRIFT

(11) **EP 4 303 110 B1**
(45) Veröffentlichungstag und Bekanntmachung des Hinweises auf die Patenterteilung: **18.11.2026**
(21) Anmeldenummer: 22183832.9
(22) Anmeldetag: 08.07.2022
(51) Int. Cl.: B62K 21/06

(54) **SYSTEM ZUM BEGRENZEN DES LENKEINSCHLAGWINKELS EINES FAHR- UND/ODER MOTORRADS SOWIE EIN FAHR- UND/ODER MOTORRAD MIT EINEM DERARTIGEN SYSTEM**
SYSTEM FOR LIMITING THE STEERING ANGLE OF A BICYCLE OR MOTORCYCLE AND A BICYCLE OR MOTORCYCLE WITH SUCH A SYSTEM
SYSTÈME DE LIMITATION DE L'ANGLE DE BRAQUAGE DIRECTIONNEL D'UNE BICYCLETTE ET/OU D'UN MOTOCYCLE, AINSI QUE BICYCLETTE ET/OU MOTOCYCLE DOTÉ D'UN TEL SYSTÈME

(43) Veröffentlichungstag der Anmeldung: 10.01.2024
(73) Patentinhaber: ADP Engineering GmbH, 64807 Dieburg (DE)
(72) Erfinder: BÖHM, Peter, 64807 Dieburg (DE)
(74) Vertreter: Isarpatent

(56) Entgegenhaltungen:
- EP-A1- 2 848 508
- DD-A1- 70 798
- DE-U1- 202009 017 382
- DE-U1- 202021 103 725
- US-A1- 2007 096 424

## Beschreibung

Die vorliegende Erfindung betrifft ein System zum Begrenzen des Lenkeinschlagwinkels eines Fahrrads zwischen einer ersten Lenkeinschlag-Endposition und einer zweiten Lenkeinschlag-Endposition sowie ein Fahrrad mit einem derartigen System.

Obwohl die vorliegende Erfindung für sämtliche durch einen Lenker steuerbare zweirädrige Fahrzeuge, insbesondere für Fahrräder und Motorräder, anwendbar ist, wird sie im Folgenden der Einfachheit halber beispielhaft anhand eines Fahrrads, insbesondere anhand eines LEVs (Light Electric Vehicle) näher erläutert.

Aus dem Stand der Technik sind Einrichtungen, sogenannte Lenkanschläge, zur Begrenzung des maximalen Lenkeinschlagwinkels mittels Nocken bekannt. Beispielsweise beschreibt die Druckschrift DE 20 2004 013 166 U1 einen gabelseitigen Anschlagsnocken, der oberhalb des Steuerrohrs an der Gabel vorgesehen ist, wobei ebenfalls oberhalb des Steuerrohrs ein Gegenanschlagselement vorgesehen ist.

Die Druckschrift DE 20 2008 004 845 U1 beschreibt einen gabelseitigen Anschlagsnocken, der ebenfalls oberhalb des Steuerrohrs am Schaft der Gabel vorgesehen ist, wobei als Gegenanschlagselement ein Nocken an dem oberen Lagerring zur Aufnahme der Gabel vorgesehen ist.

Die Druckschrift DE 20 2012 008 119 U1 beschreibt ein Anschlagselement, das in dem oberen Lagerring zur Aufnahme der Gabel integriert ist, wobei als Gegenanschlagselement ein Nocken an einer rückwärts gerichteten Oberseite des Oberrohrs des Fahrrads vorgesehen ist. EP2848508 A1 offenbart die Präambel von Anspruch 1.

Allerdings hat sich bei diesen Ansätzen die Tatsache als nachteilig herausgestellt, dass beispielsweise bei einem Sturz oder einer andersartigen rotatorischen Krafteinwirkung auf den Lenker die in den Lagerringen vorgesehenen Gegenanschlagseinrichtungen ebenfalls eine rotatorische Krafteinwirkung derart erfahren, dass diese Ringe um die Längsachse rotatorisch verdreht werden. Für eine erneute sachgemäße Ausrichtung der Lagerringe ist eine manuelle, der ursprünglichen Krafteinwirkung entgegengesetzte Kraftaufbringung erforderlich, sodass die Lagerringe in ihre ursprünglich vorgesehene Position zurück verdreht werden. Kommt es allerdings häufiger zu derartigen Lagerringverdrehungen und Wiederausrichtungen, kann dies dazu führen, dass sich beispielsweise die Lagerschalen bzw. Lagerringe im Rahmen lockern und dauerhaft defekt sind, derart, dass die Gabel aufgrund eines erhöhten Spiels nicht weiter fest in dem zugeordneten Rahmenabschnitt aufgenommen werden kann.

Des Weiteren weisen die oben genannten Lösungsansätze den Nachteil auf, dass in die oberen Lagerschalen integrierte Anschläge eine nicht besonders ästhetische Anmutung erzeugen.

Vor diesem Hintergrund liegt der vorliegenden Erfindung die Aufgabe zugrunde, ein verbessertes System zum Begrenzen des Lenkeinschlagwinkels zu gestalten.

Erfindungsgemäß wird diese Aufgabe durch ein System zum Begrenzen des Lenkeinschlagwinkels eines Fahrrads zwischen einer ersten Lenkeinschlag-Endposition und einer zweiten Lenkeinschlag-Endposition mit den Merkmalen des Anspruchs 1 sowie durch ein Fahrrad mit einem derartigen System mit den Merkmalen des Anspruchs 22 gelöst.

Demgemäß ist ein System vorgesehen zum Begrenzen des Lenkeinschlagwinkels eines Fahrrads zwischen einer ersten Lenkeinschlag-Endposition und einer zweiten Lenkeinschlag-Endposition, mit einer Radführungseinrichtung, welche einen Schaft aufweist, der eine Bewegung des Lenkers auf das Vorderrad des Fahrrads überträgt; einem Rahmenabschnitt des Fahrrads, welcher einen Aufnahmebereich für eine um die Längsachse des Schaftes drehbare Aufnahme zumindest eines Abschnitts des Schaftes der Radführungseinrichtung aufweist; einer Anschlagseinrichtung, welche an dem in dem Aufnahmebereich des Rahmenabschnitts aufgenommenen Abschnitt des Schaftes der Radführungseinrichtung angebracht ist und zumindest einen Anschlagsabschnitt aufweist; und einer Gegenanschlagseinrichtung, welche zumindest ein Gegenanschlagselement aufweist, welches als fester Bestandteil des Rahmenabschnitts im Inneren des Aufnahmebereichs des Rahmenabschnitts derart vorgesehen ist, dass in den jeweiligen Lenkeinschlag-Endpositionen jeweils ein Anschlagsabschnitt der Anschlagseinrichtung mit einem zugeordneten Gegenanschlagselement der Gegenanschlagseinrichtung in den Lenkeinschlagswinkel begrenzender Weise in Anlage gelangt. Erfindungsgemäß weist der Rahmenabschnitt im Bereich des Aufnahmebereiches eine Revisionsöffnung auf, welche einen Zugang von außen zu der Anschlagseinrichtung ermöglicht.

Darüber hinaus ist ein Fahrrad vorgesehen, welches ein derartiges System aufweist.

Die der vorliegenden Erfindung zugrundeliegende Idee besteht darin, die Anschlagseinrichtung an einem derartigen Abschnitt des Schaftes der Radführungseinrichtung vorzusehen, dass sich die Anschlagseinrichtung vollständig innerhalb des Steuerrohrs des Rahmens und somit von außen nicht sichtbar befindet. Des Weiteren ist die Gegenanschlagseinrichtung ebenfalls entsprechend innerhalb dieses Rahmenabschnitts bzw. innerhalb des Steuerrohrs und somit ebenfalls von außen nicht sichtbar vorgesehen und fest mit dem zugeordneten Rahmenabschnitt verbunden.

Somit wird vorteilhaft ein System zum Begrenzen des Lenkeinschlagwinkels geschaffen, welches auf kostengünstige Weise sowie mit einem geringen konstruktiven Aufwand eine vollständig von außen nicht sichtbare Integration der vorgesehenen Anschläge und Gegenanschläge bewerkstelligt. Vorteilhaft können hierbei durch einfache Variation beispielsweise der Anschlagseinrichtung unterschiedliche Lenkeinschlagwinkel vorgesehen werden, sodass an den jeweiligen Anwendungsfall angepasst oder je nach Wunsch des Benutzers ein größerer oder kleinerer Lenkeinschlagwinkel mittels Auswahl entsprechender Gegen-/Anschlagseinrichtungen bzw. mittels entsprechender Positionierung der Gegen-/Anschlagseinrichtungen erreicht werden kann.

Wird beispielsweise durch einen Sturz oder einen heftigen Stoß des Lenkers bei hoher Geschwindigkeit die Anschlagseinrichtung verdreht, kann die Anschlagseinrichtung auf einfache Weise neu ausgerichtet oder im Falle eines Schadens sogar auf einfache Weise ersetzt werden. Hierdurch werden vorteilhaft eine nicht gewünschte Verdrehung der Lagerschalen, wie im Stand der Technik der Fall, vermieden und dadurch entstehende Schäden am Fahrrad verhindert.

Zudem wird vorteilhaft eine von außen vollständig unsichtbare und vor Witterungseinflüssen geschützte Integration des Begrenzungssystems geschaffen, was für eine ausgezeichnete ästhetische Anmutung des Fahrrads sorgt. Ferner wird vorteilhaft die Integration einer internen Kabelverlegung gewährleistet. Bei Bedarf kann die Anschlagseinrichtung auf einfache und kostengünstige Weise entfernt werden, sodass das Fahrrad ohne eine Lenkeinschlagbegrenzung fahrbar wäre.

Das vorliegende System schafft zudem vorteilhaft eine strikte Trennung von Lenkanschlagssystem und Lagerschalen bzw. Lagersitzen im Bereich des Steuerrohrs und kann daher sehr gut gegenüber Umwelteinflüssen abgedichtet werden.

Dadurch, dass der Rahmenabschnitt im Bereich des Aufnahmebereiches die Revisionsöffnung aufweist, welche einen Zugang von außen zu der Anschlagseinrichtung ermöglicht, kann bei Bedarf die Anschlagseinrichtung vorteilhaft zum Auswählen eines geänderten Lenkeinschlagwinkels in vertikaler Richtung versetzt oder bei Verdrehung neu ausgerichtet oder bei Bedarf durch eine andere Anschlagseinrichtung ersetzt werden, ohne die Radführungseinrichtung aus dem Steuerrohr entfernen zu müssen.

Gemäß einer bevorzugten Weiterbildung sind ein erstes Gegenanschlagselement und ein zweites Gegenanschlagselement in Umfangsrichtung voneinander beabstandet vorgesehen und als integraler Bestandteil des Rahmenabschnitts im Inneren des Aufnahmebereiches des Rahmenabschnitts angeformt. Hierdurch ist die Gegenanschlagseinrichtung von außen nicht sichtbar und im Inneren des Steuerrohrs bereits bei der Fertigung des Rahmens auf einfache und kostengünstige Weise integriert, wobei sich ein gewünschter Lenkeinschlagwinkel durch eine entsprechende Anschlagseinrichtung und einen entsprechenden Abstand der beiden Gegenanschlagselemente einstellen lässt.

Gemäß einer weiteren bevorzugten Weiterbildung sind das erste Gegenanschlagselement und/oder das zweite Gegenanschlagselement stoffschlüssig und/oder formschlüssig mit dem Rahmenabschnitt ausgebildet. Hierdurch wird eine stabile Anbringung der Gegenanschlagselemente an dem zugeordneten Rahmenabschnitt bewerkstelligt.

Gemäß einer weiteren bevorzugten Weiterbildung sind mehrere Paare an ersten und zweiten Gegenanschlagselementen an in Längsrichtung des Aufnahmebereiches des Rahmenabschnitts unterschiedlichen Positionen vorgesehen, wobei die in Umfangsrichtung vorgesehenen Beabstandungen eines jeden Paares zum Gewährleisten unterschiedlicher Lenkeinschlagwinkel unterschiedlich ausgebildet sind.

Dadurch kann gegebenenfalls auch eine Variation des Lenkeinschlagwinkels mit einer Anschlagseinrichtung bewerkstelligt werden.

Gemäß einer weiteren bevorzugten Weiterbildung sind die ersten und zweiten Gegenanschlagselemente in Längsrichtung des Aufnahmebereiches des Rahmenabschnitts gesehen derart stufenartig bzw. mehrstufig ausgebildet, dass zum Gewährleisten unterschiedlicher Lenkeinschlagwinkel Bereiche mit sich in Umfangsrichtung voneinander unterscheidenden Beabstandungen vorgesehen sind, wobei vorzugsweise Winkelanzeigen an den entsprechenden Bereichen vorgesehen sind. Dadurch kann gegebenenfalls auch eine Variation des Lenkeinschlagwinkels mit einer Anschlagseinrichtung auf einfache Weise bewerkstelligt werden.

Gemäß einer weiteren bevorzugten Weiterbildung sind das erste Gegenanschlagselement und das zweite Gegenanschlagselement aus dem Material des Rahmenabschnitts oder einem sich von dem Rahmenabschnitt unterscheidenden Material, insbesondere aus einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen, ausgebildet. Vorteilhaft können die Gegenanschlagselemente auf einfache und kostengünstige Weise aus demselben Material des Steuerrohrs bereits zusammen mit dem Rahmen hergestellt werden.

Gemäß einer weiteren bevorzugten Weiterbildung ist das erste Gegenanschlagselement und/oder das zweite Gegenanschlagselement aus einem stoßdämpfenden Material ausgebildet. Die Gegenanschlagselemente aus einem zumindest teilweise elastischen Material vorzusehen, weist den Vorteil auf, dass ein gewisser Energieabbau bei einem Anschlag der Anschlagseinrichtung an den Gegenanschlagselementen erfolgen kann.

Gemäß einer weiteren bevorzugten Weiterbildung weist die Anschlagseinrichtung einen Befestigungsabschnitt auf, welcher als mittels einer reibkraftschlüssigen Verbindung, vorzugsweise einer Schraubverbindung, am vorzugsweise zylindrischen Teil des Schafts befestigt ist. Vorzugsweise liegt das Anzugsdrehmoment dieser Verbindung in einem Bereich von 1 bis 5 Nm, bevorzugt in einem Bereich von 2 bis 4 Nm und weiter bevorzugt beträgt es 3 Nm. Es ist auch eine andere Konfiguration, beispielsweise ein Pressverband (Gabelkonusprinzip) vorstellbar. Hierbei wird die drehmomentgesteuerte Klemmkraft durch die Wahl der Passung ersetzt. Hierdurch kann auf einfache und kostengünstige Weise eine Anschlagseinrichtung durch eine andere Anschlagseinrichtung ersetzt werden, beispielsweise im Falle einer Beschädigung oder im Falle eines anders gewünschten Lenkeinschlagwinkels.

Gemäß einer weiteren bevorzugten Weiterbildung ist der Klemmabschnitt für einen geeigneten Energieabbau im Falle einer rotatorischen Krafteinwirkung mittels eines vorbestimmten Anzugsdrehmomentes der Schraubverbindung mit einer vorbestimmten Reibschlusskraft an dem zugeordneten Abschnitt des Schaftes angebracht. Hierdurch erfolgt ebenfalls vorteilhaft im Falle einer bestimmten rotatorischen Krafteinwirkung ein Energieabbau dadurch, dass sich die Anschlagseinrichtung relativ zum Schaft verdreht, um eine Beschädigung der Gegenanschlagseinrichtung oder der Anschlagseinrichtung zu verhindern. Vorzugsweise ist bei einer derartigen reibkraftschlüssigen Verbindung ein maximal übertragbares Drehmoment bzw. ein Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen.

Gemäß einer weiteren bevorzugten Weiterbildung ist die Anschlagseinrichtung, beispielsweise als einteiliges oder mehrteiliges Bauteil, vorzugsweise aus einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen hergestellt. Hierdurch kann vorteilhaft die Anschlagseinrichtung aus einem gängigen Material als kostengünstiges Austauschbauteil hergestellt werden.

Gemäß einer weiteren bevorzugten Weiterbildung ist der Anschlagsabschnitt als in Längsrichtung verlängertes Element des Klemmabschnitts ausgebildet. Dadurch kann die Anschlagsfläche bei Bedarf sich in den Bereich des konisch ausgebildeten Abschnitts des Schaftes erstreckend ausgebildet sein, sodass ein in Längsrichtung gesehen sich langstreckender Anschlagsabschnitt mit entsprechend unterschiedlich ausgebildeten Anschlagsflächen vorgesehen sein kann.

Gemäß einer weiteren bevorzugten Weiterbildung ist der Anschlagsabschnitt der Anschlagseinrichtung im Bereich der Schraubverbindung vorgesehen, wobei die Anschlagseinrichtung derart am Schaft angebracht ist, dass die Anschlagseinrichtung zur Vorderseite des Fahrrads hin orientiert vorgesehen ist. Hierdurch kann eine spezielle Kabelführung von einzelnen Kabeln, wie beispielsweise von mechanischen Zügen (Bowdenzüge, Seilzüge), elektrischen Kabeln oder Leitungen, hydraulischen Leitungen, für z.B. Schaltzüge, Bremszüge, Sattelstützenzüge, Lichtleitungen etc., im Inneren des Steuerrohrs vorteilhaft gewährleistet werden.

Gemäß einer weiteren bevorzugten Weiterbildung ist der Anschlagsabschnitt als zwei von dem Klemmabschnitt aus sich in Längsrichtung erstreckende und einen Spalt definierende Stege ausgebildet, wobei der Spalt in Verbindung mit der Schraubverbindung eine Veränderung des Durchmessers des Befestigungsabschnitts zum Gewährleisten einer vorbestimmten Klemmkraft bewirkt. Hierdurch kann auf einfache und kostengünstige Weise eine vorbestimmte Klemmwirkung und eine vorbestimmte Verdrehsicherung der Anschlagseinrichtung gewährleistet werden. Auch kann bei Bedarf eine gewünschte Verdrehung bei Einwirken einer vorbestimmten Kraft für einen entsprechenden Energieabbau eingestellt werden.

Gemäß einer weiteren bevorzugten Weiterbildung weisen die Stege des Anschlagsabschnitts für eine variable Einstellung des Lenkeinschlagwinkels in Längsrichtung gesehen mehrstufige Abschnitte mit unterschiedlichen Stegbreiten auf. Dadurch kann durch eine entsprechende vertikale Anordnung der Anschlagseinrichtung ein Stegabschnitt mit einer vorbestimmten Stegbreite derart positioniert werden, dass er in Anlage mit der Gegenanschlagseinrichtung zum Liefern eines vorbestimmten Lenkeinschlagwinkels gelangt. Sollte bei Bedarf ein anderer Lenkeinschlagwinkel gewünscht sein, ist die Anschlagseinrichtung lediglich in vertikaler Richtung am Schaft entsprechend zu versetzen, um einen anderen Steg mit einer anderen Stegbreite auszuwählen. Beispielsweise ist auch eine mehrstufige Ausgestaltung des Anschlagsabschnitts denkbar.

Gemäß einer weiteren bevorzugten Weiterbildung sind etwaige innerhalb des Aufnahmebereiches des Rahmenabschnitts von oben her verlaufende Kabel zum Gewährleisten eines flachen Kabelverlaufs oberhalb des ersten und/oder zweiten Gegenanschlagselements in einen rückwärts gerichteten Rahmenabschnitt des Fahrrads geführt. Dadurch können vorteilhaft Beschädigungen der geführten Kabel auf einfache Weise vermieden werden.

Gemäß einer weiteren bevorzugten Weiterbildung ist der Anschlagsabschnitt der Anschlagseinrichtung gegenüberliegend der Schraubverbindung vorgesehen, wobei die Anschlagseinrichtung derart am Schaft angebracht ist, dass die Anschlagseinrichtung zur Rückseite des Fahrrads orientiert vorgesehen ist. Hierdurch kann eine spezielle Kabelführung im Inneren des Steuerrohrs vorteilhaft gewährleistet werden.

Gemäß einer weiteren bevorzugten Weiterbildung weist der Anschlagsabschnitt eine oder mehrere Anformungen mit unterschiedlich ausgebildeten Anformungsbreiten auf oder ist stufenartig bzw. mehrstufig mit in Querrichtung sich unterschiedlich erstreckenden Anschlagsflächen ausgebildet. Somit ist auch eine mehrstufige Ausgestaltung der Anformung/en denkbar. Hierdurch kann der Benutzer durch entsprechend vertikale Positionierung der Anschlagseinrichtung eine gewünschte Lenkeinschlagwinkelbegrenzung erzielen.

Gemäß einer weiteren bevorzugten Weiterbildung sind etwaige innerhalb des Aufnahmebereiches des Rahmenabschnitts von oben her verlaufende Kabel zum Gewährleisten eines ausreichenden Kabelaufnahmeabschnitts unterhalb des ersten und/oder zweiten Gegenanschlagselements in einen rückwärts gerichteten Rahmenabschnitt des Fahrrads geführt. Dadurch wird im Steuerrohr ein ausreichend voluminöser Aufnahmebereich zur Aufnahme der Kabel selbst bei bestimmten Lenkbewegungen vorgesehen. Bei jeder Lenkbewegung kommt es zu einer Relativbewegung der Kabel, die am Lenker befestigt sind. Je nach Lenkeinschlagwinkel beträgt diese Relativbewegung ca. 0-5 cm. Diese Relativbewegung kann zu Beschädigungen an den Kabeln selbst und/oder des Unterrohrs führen. Dieses Szenario lässt sich somit ohne zusätzliche konstruktive Maßnahme verhindern, da die von oben in das Steuerrohr verlaufenden Kabel nach vorne in das Steuerrohr, um die Gegenanschlagselemente herum und unterhalb der Gegenanschlagselemente in das Unterrohr vorteilhaft führbar sind.

Gemäß einer weiteren bevorzugten Weiterbildung ist das System ausgebildet, den Lenkeinschlagwinkel auf einen Winkelbereich von 25° bis 85°, bevorzugt auf einen Winkelbereich von 60° bis 80°, und weiter bevorzugt auf einen Winkelbereich von 65° bis 75°, je Lenkseite zu begrenzen. Es ist für einen Fachmann offensichtlich, dass bei Bedarf auch andere Lenkwinkel vorgesehen werden können.

Beispielsweise kann die Revisionsöffnung durch eine entsprechende Klappe oder Deckel, insbesondere zum Schutz vor eintretendem Wasser oder äußeren Einflüssen, verschließbar sein.

Gemäß einer weiteren bevorzugten Weiterbildung ist im Bereich der Revisionsöffnung vorzugsweise eine oder mehrere Ausrichtmarkierungen, beispielsweise in Form von zwei mittig und in vertikaler Richtung gegenüberliegenden Einkerbungen, vorgesehen, sodass eine Neuausrichtung der Anschlagseinrichtung auf einfache Weise dadurch bewerkstelligt werden kann, dass der Spalt der Anschlagseinrichtung in Flucht mit den beiden gegenüberliegenden Einkerbungen gebracht wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere sei darauf hingewiesen, dass im Kontext der vorliegenden Anmeldung das Wort "ein/eine" den Inhalt der hier gezeigten Erfindung nicht auf "genau ein/eine" oder "ein/eine einzige/r" beschränken soll. Vielmehr ist die Bezeichnung "ein/eine" als mindestens "ein/eine" auszulegen, sofern nicht explizit etwas anderes ausgeführt ist.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische seitliche Schnittansicht eines vorderen Abschnitts eines Fahrradrahmens zur Erläuterung eines bevorzugten Ausführungsbeispiels der vorliegenden Erfindung;
- Fig. 2: eine schematische perspektivische Schnittansicht von schräg oben eines Steuerrohrs zur Erläuterung eines bevorzugten Ausführungsbeispiels der vorliegenden Erfindung;
- Fig. 3: eine schematische Schnittansicht von oben auf ein Steuerrohr zur Erläuterung eines bevorzugten Ausführungsbeispiels der vorliegenden Erfindung;
- Fig. 4: eine schematische perspektivische Ansicht von schräg oben auf eine Anschlagseinrichtung gemäß einem ersten bevorzugten Ausführungsbeispiel der vorliegenden Erfindung;
- Fig. 5: eine Seitenansicht der Anschlagseinrichtung aus Figur 4;
- Fig. 6: eine Vorderansicht der Anschlagseinrichtung aus den Figuren 4 und 5;
- Fig. 7: eine schematische perspektivische Ansicht von schräg vorne oben einer Radführungseinrichtung mit angebrachter Anschlagseinrichtung gemäß dem ersten Ausführungsbeispiel der vorliegenden Erfindung;
- Fig. 8: eine schematische perspektivische Ansicht von schräg oben auf eine Anschlagseinrichtung gemäß einer bevorzugten Abwandlung der Anschlagseinrichtung gemäß dem ersten Ausführungsbeispiel der vorliegenden Erfindung;
- Fig. 9: eine schematische Draufsicht auf ein System mit einer Anschlagseinrichtung gemäß dem ersten Ausführungsbeispiel der vorliegenden Erfindung in einer geraden Lenkposition;
- Fig. 10: eine schematische Draufsicht auf ein System mit einer Anschlagseinrichtung gemäß dem ersten Ausführungsbeispiel der vorliegenden Erfindung in einer ersten Lenkeinschlag-Endposition;
- Fig. 11: eine schematische Perspektivansicht einer bevorzugten Kabelführung bei Verwendung einer Anschlagseinrichtung gemäß dem ersten Ausführungsbeispiel der vorliegenden Erfindung;
- Fig. 12: eine schematische Perspektivansicht von schräg oben einer Anschlagseinrichtung gemäß einem zweiten bevorzugten Ausführungsbeispiel der vorliegenden Erfindung;
- Fig. 13: eine Seitenansicht der Anschlagseinrichtung aus Figur 11;
- Fig. 14: eine Vorderansicht der Anschlagseinrichtung gemäß dem zweiten Ausführungsbeispiel der vorliegenden Erfindung;
- Fig. 15: eine schematische Ansicht von hinten einer Radführungseinrichtung mit angebrachter Anschlagseinrichtung gemäß dem zweiten Ausführungsbeispiel der vorliegenden Erfindung;
- Fig. 16: eine Draufsicht auf ein System mit einer Anschlagseinrichtung gemäß dem zweiten Ausführungsbeispiel der vorliegenden Erfindung in einer geraden Lenkposition;
- Fig. 17: eine Draufsicht auf ein System mit einer Anschlagseinrichtung gemäß dem zweiten Ausführungsbeispiel der vorliegenden Erfindung in einer ersten Lenkeinschlag-Endposition;
- Fig. 18: eine schematische Perspektivansicht einer Kabelführung bei Verwendung einer Anschlagseinrichtung gemäß dem zweiten Ausführungsbeispiel der vorliegenden Erfindung;
- Fig. 19: eine schematische Vorderansicht eines Rahmenabschnitts zur Aufnahme einer Anschlagseinrichtung mit vorgesehener Revisionsöffnung gemäß einem Ausführungsbeispiel der vorliegenden Erfindung; und
- Fig. 20: eine schematische Vorderansicht eines Rahmenabschnitts zur Aufnahme einer Anschlagseinrichtung mit vorgesehener Revisionsöffnung und Positionierungsmarkierung gemäß einem Ausführungsbeispiel der vorliegenden Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausgestaltungen und viele der genannten Vorteile ergeben sich im Hinblick auf die Figuren der Zeichnung. Die Elemente der Figuren sind nicht notwendigerweise maßstabsgetreu zueinander gezeigt.

In den Figuren der Zeichnung sind gleiche, funktionsgleiche und gleichwirkende Elemente, Merkmale und Komponenten - sofern nichts Gegenteiliges ausgeführt ist - jeweils mit denselben Bezugszeichen versehen.

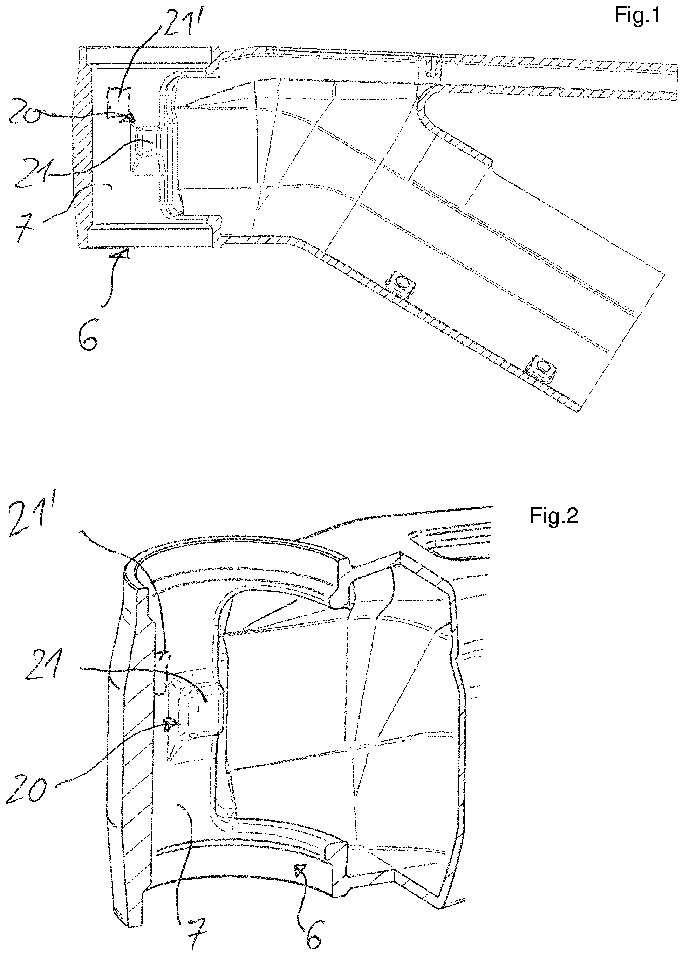

Die Figuren 1 und 2 illustrieren jeweils schematische Querschnittsansichten eines Teilbereichs eines Rahmens eines Fahrrads, wobei Figur 1 eine Seitenquerschnittsansicht und Figur 2 eine Querschnittsansicht in perspektivischer Darstellung von schräg oben illustriert.

Wie in den Figuren 1 und 2 ersichtlich ist, weist der Rahmen des Fahrrads einen im Allgemeinen als Steuerrohr bezeichneten vorderen Rahmenabschnitt 6 auf, welcher der Aufnahme einer weiter unten beschriebenen Radführungseinrichtung, im Allgemeinen eine Fahrradgabel, dient. Der Rahmenabschnitt 6 weist einen oberen Lagerabschnitt zur Aufnahme beispielsweise eines nicht dargestellten oberen Lagerrings und eines oberen nicht dargestellten Dichtungsrings etc. auf. Analog weist der Rahmenabschnitt 6 einen unteren Lagerbereich zur Aufnahme eines nicht dargestellten unteren Lagerrings und eines unteren nicht dargestellten Dichtungsrings etc. auf.

Wie in den Figuren 1 und 2 ersichtlich ist, ist der Rahmenabschnitt 6 im Wesentlichen zylindrisch entlang einer vertikalen Längsrichtung ausgebildet und weist einen Aufnahmebereich 7 zur Aufnahme eines Abschnitts der Radführungseinrichtung bzw. der Fahrradgabel auf.

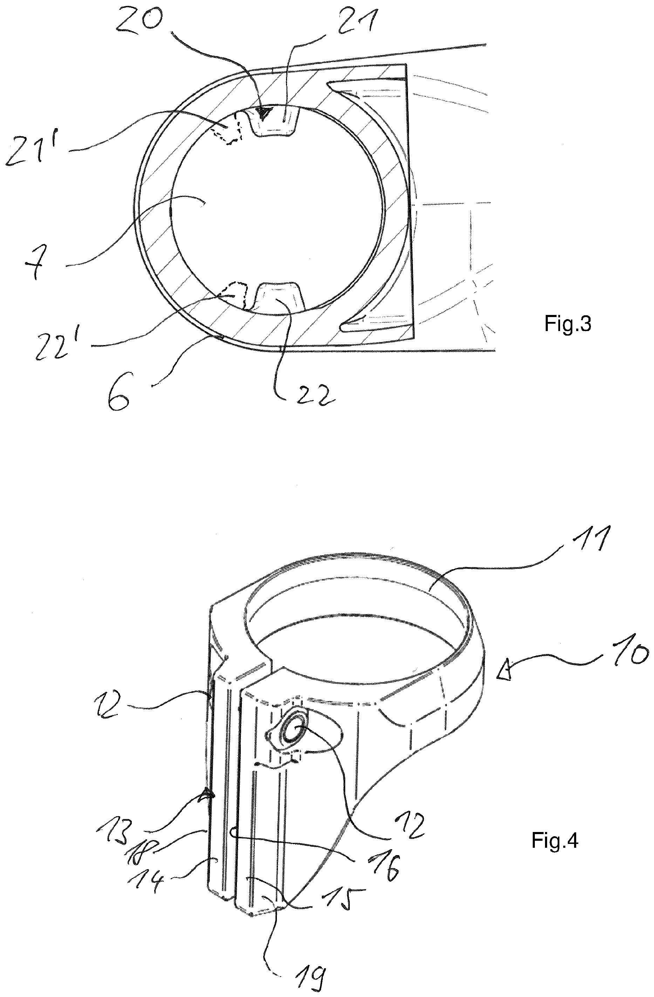

Des Weiteren ist in den Figuren 1 und 2 dargestellt, dass gemäß dem vorliegenden Ausführungsbeispiel in dem Aufnahmebereich 7 eine Gegenanschlagseinrichtung 20 vorgesehen ist. Die Gegenanschlagseinrichtung 20 besteht demgemäß aus einem ersten Gegenanschlagselement 21 und einem zweiten Gegenanschlagselement 22. Diese beiden Gegenanschlagselemente 21, 22 sind in der Draufsicht des Rahmenabschnitts 6 aus Figur 3 ersichtlich. Vorzugsweise sind das erste Gegenanschlagselement 21 und das zweite Gegenanschlagselement 22 als integraler Bestandteil des Rahmenabschnitts 6 im Inneren des Aufnahmebereichs 7 in etwa gegenüberliegend - das erste Gegenanschlagselement 21 auf der rechten Seite und das zweite Gegenanschlagselement 22 auf der linken Seite - und in in etwa gleicher vertikaler Höhe bzw. Positionierung vorgesehen.

Es ist allerdings auch möglich, dass die Gegenanschlagselemente 21, 22 als separate Anformungen an dem Rahmenabschnitt 6 an entsprechenden Positionen angeformt werden. Dabei ist eine stoffschlüssige und/oder formschlüssige Anbringung der Gegenanschlagselemente 21, 22 vorteilhaft.

Die Gegenanschlagselemente 21, 22 können vorteilhaft im Falle eines integralen Bestandteils des Rahmenabschnitts 6 aus dem gleichen Material wie der Fahrradrahmen, insbesondere aus Aluminium oder einem Faserverbundwerkstoff, hergestellt sein. Im Falle einer nachträglichen Anformung an dem Rahmenabschnitt 6 können auch sich von dem Fahrradrahmen unterscheidende Materialien für die Gegenanschlagselemente 21, 22 ausgewählt werden. Die Gegenanschlagselemente 21, 22 können hierbei insbesondere aus einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder einem vergleichbaren Material hergestellt sein. Es kann besonders vorteilhaft sein, die Gegenanschlagselemente 21, 22 aus einem Material mit stoßdämpfenden Eigenschaften auszubilden. Hierdurch kann im Falle eines Anschlags durch ein entsprechend zugeordnetes Anschlagselement ein Energieabbau erreicht werden, der unter Umständen Beschädigungen beteiligter Bauteile verhindern kann.

In dem in den Figuren 1 bis 3 dargestellten Ausführungsbeispiel ist ein erstes Paar an Gegenanschlagselementen 21, 22 auf einer ersten vertikalen Höhe mit einer in Umfangsrichtung ersten Beabstandung voneinander durch die in durchgezogenen Linien dargestellten Anformungen illustriert. Ein weiteres Paar an Gegenanschlagselementen 21', 22' auf einer zweiten vertikalen Höhe mit einer in Umfangsrichtung zweiten Beabstandung voneinander ist durch die in gestrichelten Linien dargestellten Anformungen illustriert.

Es ist allerdings auch vorstellbar, dass lediglich ein Paar oder mehr als zwei Paare an Gegenanschlagselementen vorgesehen sind, wobei sich jeweils ein Paar an Gegenanschlagselementen auf derselben vertikalen Höhe befindet und sich von den vertikalen Höhen der anderen Paare an Gegenanschlagselementen unterscheidet. Vorteilhaft weist jedes Paar an Gegenanschlagselementen eine sich von den anderen Paaren unterscheidende umfängliche Beabstandung auf, sodass beispielsweise ein zweites Paar an Gegenanschlagselementen einen kleineren oder größeren Winkel als das erste Paar aufweist. Ein derartiges zweites Paar an Gegenanschlagselementen 21' 22' ist, wie oben bereits erläutert wurde, in Figur 3 lediglich beispielhaft gestrichelt dargestellt. Auch eine mehrstufige Ausgestaltung der Gegenanschlagseinrichtung ist durchaus vorstellbar.

Beim Vorsehen mehrerer Paare an Gegenanschlagselementen kann mit einer Anschlagseinrichtung zwischen mehreren Lenkwinkelbereichen durch entsprechende Positionierung der zugeordneten Anschlagseinrichtung ausgewählt werden. Im Falle lediglich eines Paares an Gegenanschlagselementen wäre eine Variation des Lenkwinkelbereiches durch eine Variation der Anschlagseinrichtung bzw. entsprechende Positionierung der Anschlagseinrichtung möglich. Der Lenkwinkelbereich kann somit durch entsprechende Auswahl der Form der Gegenanschlagselemente und entsprechender Positionierung der Gegenanschlagselemente beliebig voreingestellt werden, eine entsprechend zugeordnete und ausgebildete Anschlagseinrichtung vorausgesetzt.

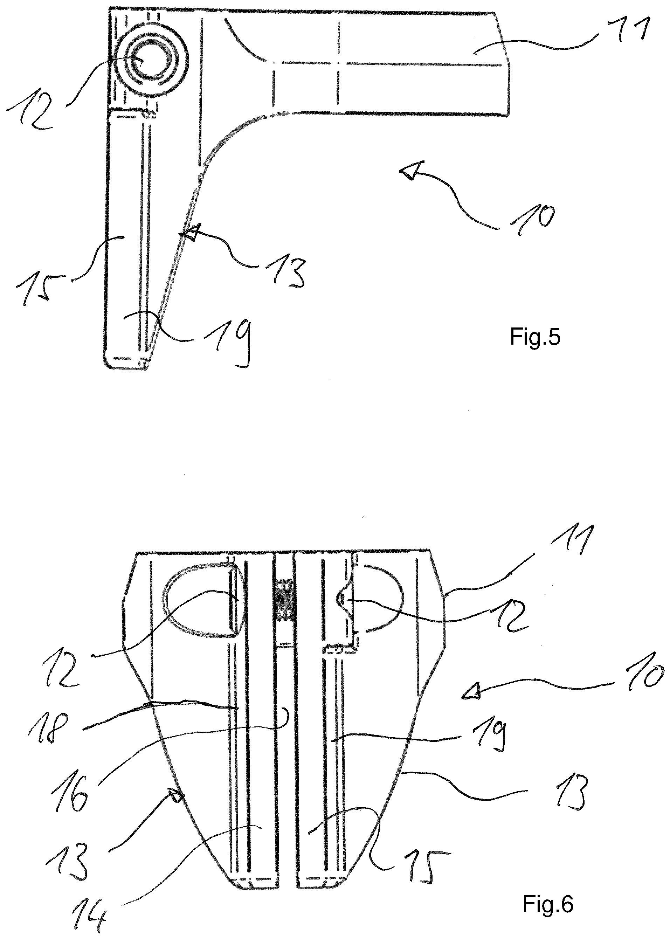

Im Folgenden wird unter Bezugnahme auf die Figuren 4 bis 6 eine Anschlagseinrichtung 10 gemäß einem ersten Ausführungsbeispiel der vorliegenden Erfindung näher erläutert. Hierbei zeigt Figur 4 eine perspektivische Ansicht von schräg oben, Figur 5 eine Seitenansicht und Figur 6 eine Vorderansicht der Anschlagseinrichtung 10. Wie in den Figuren 4 bis 6 ersichtlich ist, weist die Anschlagseinrichtung 10 gemäß dem ersten Ausführungsbeispiel einen Befestigungsabschnitt 11 auf, der gemäß dem vorliegenden Ausführungsbeispiel als ringförmiger Klemmabschnitt 11 ausgebildet ist. Der ringförmige Klemmabschnitt 11 weist vorzugsweise einen Spalt 16 und eine Schraubverbindung 12 auf, derart, dass mittels der Schraubverbindung 12 der Innendurchmesser des ringförmigen Befestigungsabschnitts bzw. Klemmabschnitts 11 variierbar ist. Dadurch wird bei einer Anbringung der Anschlagseinrichtung 10 an einem Schaftabschnitt der Radführungseinrichtung bzw. der Gabel 2 eine reibschlüssige Klemmverbindung mit einer vorbestimmten Reibschlusskraft gewährleistet. Die Befestigung kann ganz allgemein mittels einer reibkraftschlüssigen Verbindung, vorzugsweise einer Schraubverbindung, am vorzugsweise zylindrischen Teil des Schafts vorgesehen sein. Vorzugsweise liegt das Anzugsdrehmoment dieser Verbindung in einem Bereich von 1 bis 5 Nm, bevorzugt in einem Bereich von 2 bis 4 Nm und weiter bevorzugt beträgt es 3 Nm. Vorzugsweise ist bei einer derartigen reibkraftschlüssigen Verbindung ein maximal übertragbares Drehmoment bzw. ein Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen. Vorliegende Werte und Wertebereiche sind lediglich als ungefähre Angaben zu verstehen, da das maximal übertragbare Drehmoment von mehreren Faktoren abhängt, wie beispielsweise dem Reibwert der jeweils verwendeten Reibpaarung.

Es ist auch eine andere Konfiguration, beispielsweise ein Pressverband (Gabelkonusprinzip) vorstellbar. Hierbei wird die drehmomentgesteuerte Klemmkraft durch die Wahl der Passung entsprechend ersetzt.

Des Weiteren weist gemäß dem ersten Ausführungsbeispiel die Anschlagseinrichtung 10 einen im Bereich der Schraubverbindung 12 sich in vertikaler Richtung nach unten erstreckenden Anschlagsabschnitt 13 auf, der gemäß dem vorliegenden Ausführungsbeispiel aus zwei gegenüberliegenden und sich in Längsrichtung erstreckenden Stegen 14, 15 gebildet ist. Die Stege 14, 15 sind durch den mittigen Spalt 16 voneinander beabstandet und weisen jeweils auf der vom Spalt weg gerichteten Seite eine erste Anschlagsfläche 18 bzw. eine zweite Anschlagsfläche 19 auf.

Gemäß dem vorliegenden ersten Ausführungsbeispiel sind die Stege 14, 15 mitsamt ihrer Anschlagsflächen 18, 19 auf der Seite der Anschlagseinrichtung 10 vorgesehen, auf welcher sich die Schraubverbindung sowie der entsprechende Spalt 16 befinden. Diese Seite wird im Verwendungsfall vorzugsweise zur Vorderseite des Fahrrads hin orientiert, was weiter unten näher beschrieben wird.

Die Anschlagseinrichtung 10 ist vorzugsweise als einteiliges oder mehrteiliges Bauteil ausgebildet. Beispielsweise kann die Anschlagseinrichtung 10 aus insbesondere einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen hergestellt sein. Vorteilhaft kann auch ein besonders stoßdämpfendes Material verwendet werden, um einen gewünschten Energieabbau im Falle bestimmter Krafteinwirkungen zu erzielen.

Es ist für einen Fachmann offensichtlich, dass die Anschlagseinrichtung 10 anstatt der sich einheitlich in Längsrichtung erstreckenden Stege auch Stegabschnitte mit unterschiedlichen Breitenabmessungen und/oder eine mehrstufige Ausgestaltung der Anschlagsflächen 18, 19 aufweisen kann. In diesem Fall kann der Benutzer die Anschlagseinrichtung 10 an dem Gabelschaft des Fahrrads derart entsprechend in vertikaler Richtung positionieren, dass bestimmte Anschlagsflächen 18, 19 mit vorbestimmter Breitenerstreckung in Anlage mit den zugeordneten Gegenanschlagselementen 21, 22 zum Einstellen eines gewünschten Lenkeinschlagwinkels gelangen.

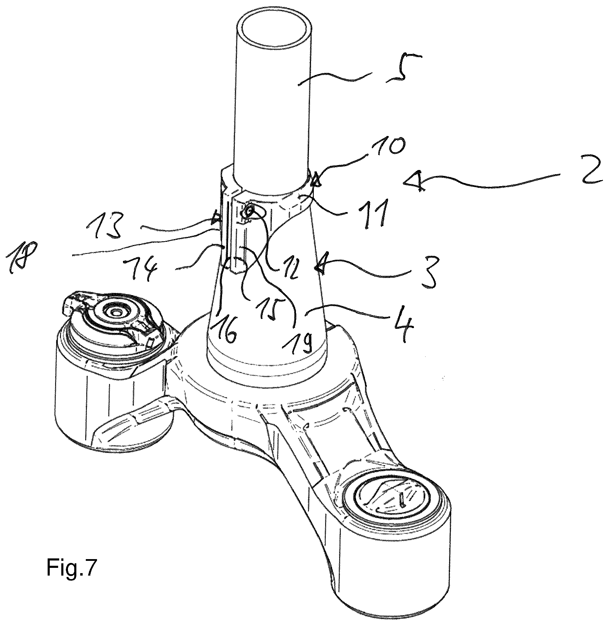

Figur 7 illustriert eine perspektivische Ansicht einer Radführungseinrichtung 2, beispielsweise eine Gabel eines Fahrrads, wobei die Gabel 2 lediglich teilweise dargestellt ist. An der Radführungseinrichtung 2 ist gemäß Figur 7 die Anschlagseinrichtung 10 gemäß dem ersten Ausführungsbeispiel der vorliegenden Erfindung angebracht. Wie in Figur 7 ferner ersichtlich ist, ist der Befestigungsabschnitt bzw. Klemmabschnitt 11 der Anschlagseinrichtung 10 auf den zylindrischen Schaftabschnitt 5 des Schaftes 3 der Gabel 2 mittels der Schraubverbindung 12 reibschlüssig mit einem vorbestimmten Anzugsdrehmoment befestigt.

In diesem Ausführungsbeispiel ist der Anschlagsabschnitt 13 der Anschlagseinrichtung 10 mitsamt der Schraubverbindung 12 in Richtung der Vorderseite des Fahrrads orientiert.

Der Anschlagsabschnitt 13 erstreckt sich ausgehend von dem Befestigungsabschnitt 11 in vertikaler Richtung nach unten, so dass der Anschlagsabschnitt 13 zumindest teilweise über dem konischen Schaftabschnitt 4 der Gabel 2 positioniert ist. Die Anschlagseinrichtung 10 weist hierfür eine entsprechend geeignete geometrische, beispielsweise nach vorne gezogene Form auf. Dadurch kann zum einen die Anschlagseinrichtung 10 relativ weit nach unten in vertikaler Richtung positioniert werden und damit Platz für eine entsprechende Kabelführung im oberen Bereich des Steuerrohrs schaffen. Ferner kann hierdurch auch die Längserstreckung der Anschlagsflächen bzw. der Stege entsprechend ausgedehnt werden, um im Falle einer mehrstufigen Ausbildung eine entsprechende Vielzahl an Anschlagsflächen mit sich unterscheidenden Breitenabmessungen zum Einstellen unterschiedlicher Lenkeinschlagswinkel zu gewährleisten.

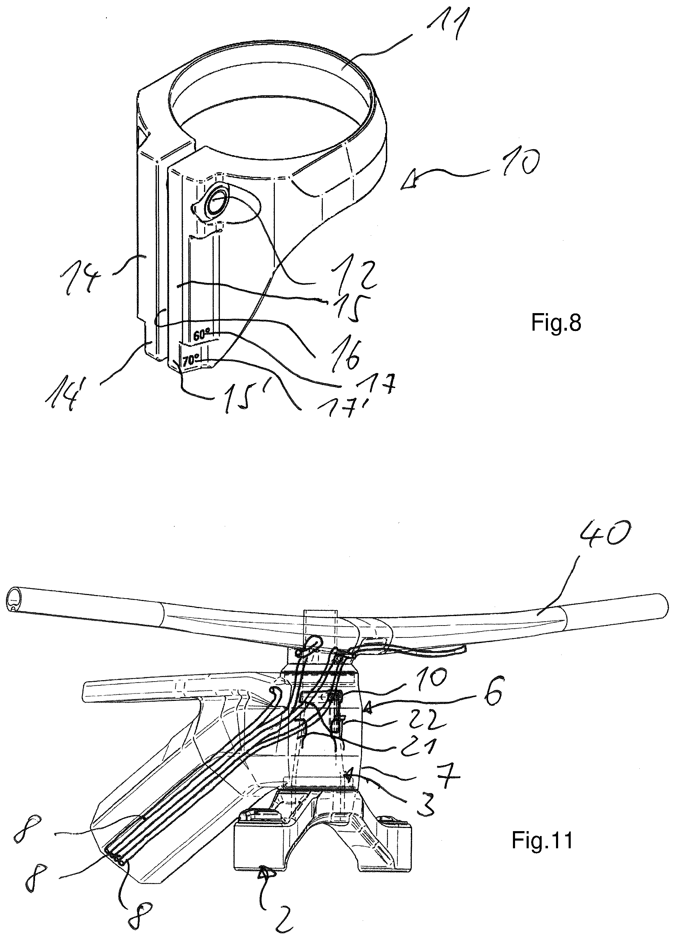

Figur 8 illustriert eine schematische perspektivische Ansicht von schräg oben auf eine Anschlagseinrichtung 10 gemäß einer bevorzugten Abwandlung der Anschlagseinrichtung 10 gemäß dem ersten Ausführungsbeispiel der vorliegenden Erfindung. Bei dieser Abwandlung ist vorzugsweise vorgesehen, die ersten und zweiten Stege 14, 15 mehrstufig auszubilden, sodass beispielsweise zwei Paare an Stegen, in der Figur 8 mit den Bezugszeichen 14, 15 für das erste Paar und mit den Bezugszeichen 14', 15' für das zweite Paar gekennzeichnet, vorgesehen sind, die aufgrund ihrer unterschiedlichen Breitenerstreckungen unterschiedliche Lenkeinschlag-Winkelbegrenzungen definieren. Vorzugsweise sind die mit dem jeweiligen Paar an Stegen hervorgerufenen Einschlagwinkel mittels einer jeweils zugeordneten Winkelmarkierung bzw. Winkelanzeige 17, 17' entsprechend gekennzeichnet. In Figur 8 ist dies beispielhaft für die Einschlagwinkel von 60° für das erste Stegpaar 14, 15 und von 70° für das zweite Stegpaar 14', 15' dargestellt. Es ist für einen Fachmann offensichtlich, dass eine beliebige Anzahl an Stegpaaren bzw. Abstufungen mit unterschiedlichen und sich von den beiden oben genannten Lenkwinkeln unterscheidenden Begrenzungswinkeln möglich ist.

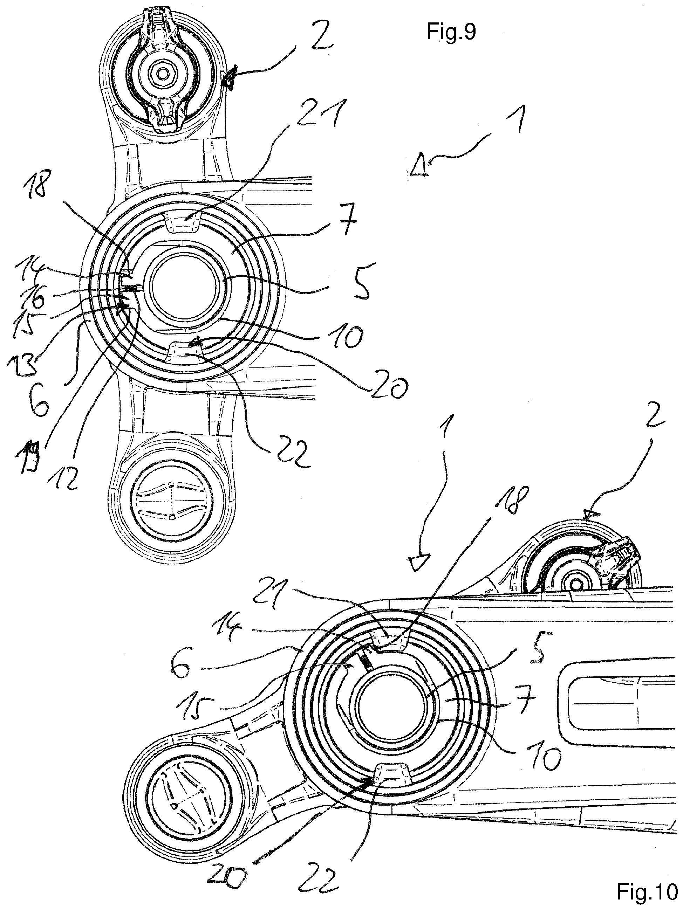

In den Figuren 9 und 10 ist eine Draufsicht auf ein System 1 gemäß dem ersten Ausführungsbeispiel der vorliegenden Erfindung schematisch dargestellt. Wie in den Figuren 9 und 10 ersichtlich ist, ist die Anschlagseinrichtung 10 derart auf dem Schaft 3 der Gabel 2 befestigt, dass der Anschlagsabschnitt 13 in Richtung der Vorderseite des Fahrrads orientiert ausgerichtet ist. Im Falle eines Lenkeinschlags, wie beispielhaft in Figur 10 für einen rechtsseitigen Einschlag dargestellt ist, gelangt bei einem vorbestimmten Lenkeinschlagwinkel auf der rechten Seite die erste Anschlagsfläche 18 des ersten Steges 14 des Anschlagabschnitts 13 der Anschlagseinrichtung 10 in Anlage mit der entsprechend zugeordneten Anschlagsfläche des ersten Gegenanschlagselementes 21. Analoges gilt bei einem Lenkeinschlag zur linken Seite hin.

Somit kann ein vorbestimmter Lenkeinschlagwinkel durch ein Zusammenspiel der Ausgestaltungen und Positionierungen der ersten und zweiten Gegenanschlagselemente 21, 22 sowie der Anschlagsflächen 18, 19 des Anschlagabschnitts 13 der Anschlagseinrichtung 10 gewährleistet werden.

Figur 11 illustriert eine schematische Darstellung einer Kabelführung im Lenkerbereich gemäß einem bevorzugten Ausführungsbeispiel unter Verwendung einer Anschlagseinrichtung 10 gemäß dem ersten bevorzugten Ausführungsbeispiel der vorliegenden Erfindung. Wie in Figur 11 lediglich schematisch angedeutet ist, wird vorteilhaft bei einer in vertikaler Richtung gesehen weit unten am Schaft 3 positionierter Anschlagseinrichtung 10 bzw. bei sich noch über den konischen Schaftabschnitt 4 erstreckendem Anschlagsabschnitt 13 ein ausreichend großer Freiraum im oberen Bereich des Steuerrohrs bzw. des Aufnahmebereichs 7 des Rahmenabschnitts 6 derart geschaffen, dass ein flacher Verlauf der von oben zugeführter und durch das Steuerrohr hindurchgeführter Kabel 8 innerhalb des Systems unter direkter Führung der Kabel in einen rückwärts gerichteten Rahmenabschnitt des Fahrrads ermöglicht wird. Hierbei verlaufen die Kabel 8 vorzugsweise in vertikaler Richtung gesehen oberhalb der ersten und zweiten Gegenanschlagselemente 21, 22. Vorteilhaft kann bei einer derartigen Ausgestaltung des Systems 1 eine derartige Kabelverlegung durch das obere Steuerrohr hindurch auch bei sehr kurzen Steuerrohrlängen realisiert werden, ohne dass es zu Kabelschädigungen aufgrund eines zu engen Bauraums kommen kann.

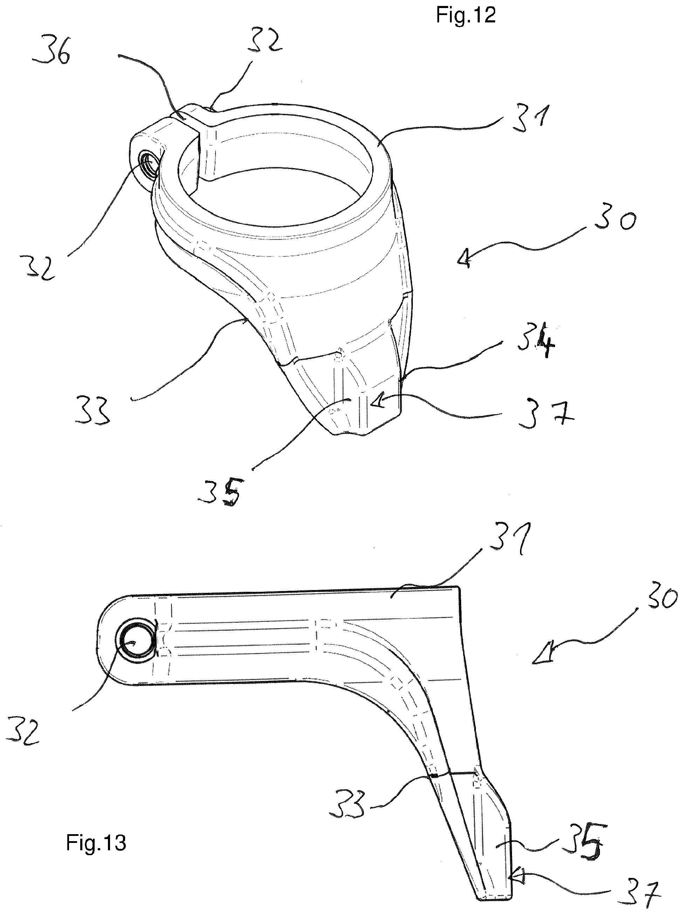

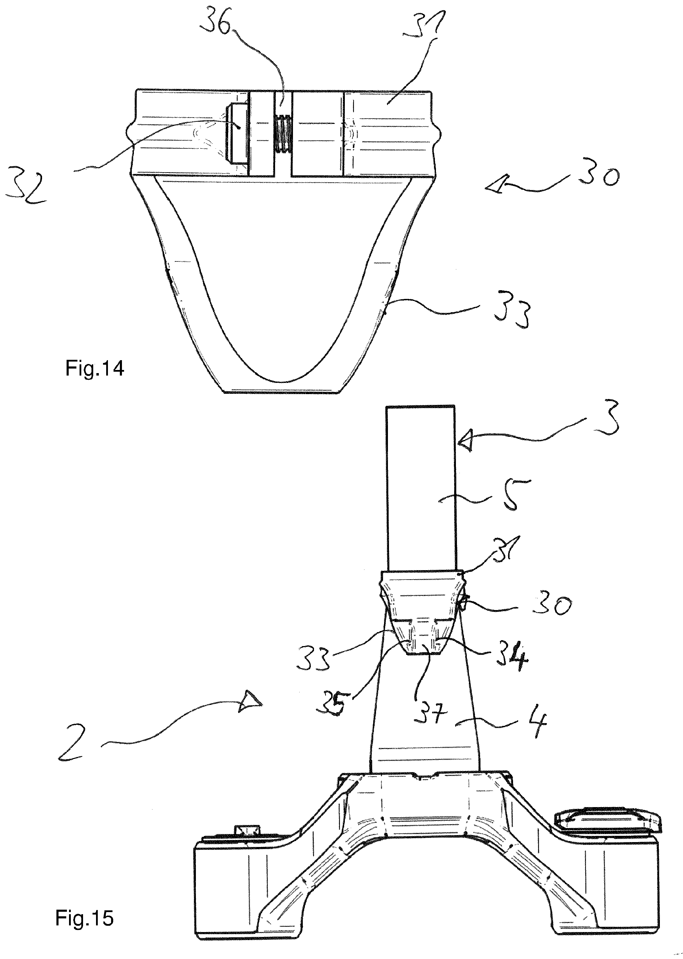

Im Folgenden wird unter Bezugnahme auf die Figuren 12 bis 14 eine Anschlagseinrichtung 30 gemäß einem zweiten bevorzugten Ausführungsbeispiel der vorliegenden Erfindung näher erläutert. Hierbei zeigt Figur 12 eine perspektivische Ansicht von schräg oben, Figur 13 eine Seitenansicht und Figur 14 eine im Einbau zur Fahrradrückseite gerichtete Ansicht der Anschlagseinrichtung 30.

Wie in den Figuren 12 bis 14 ersichtlich ist, weist die Anschlagseinrichtung 30 gemäß dem zweiten bevorzugten Ausführungsbeispiel der vorliegenden Erfindung analog zum ersten Ausführungsbeispiel einen Befestigungsabschnitt bzw. Klemmabschnitt 31 auf, welcher als ringförmiger Abschnitt ausgebildet ist. Der ringförmige Klemmabschnitt 31 weist wiederum einen Spalt 36 auf, welcher mittels einer Schraubverbindung 32 derart veränderbar ist, dass der Innendurchmesser des Befestigungsabschnitts bzw. Klemmabschnitts 31 durch ein vorbestimmtes Anzugsdrehmoment der Schraubverbindung 32 entsprechend veränderbar ist. Die Befestigung kann wiederum ganz allgemein als mittels einer reibkraftschlüssigen Verbindung, vorzugsweise einer Schraubverbindung, am vorzugsweise zylindrischen Teil des Schafts vorgesehen sein. Vorzugsweise liegt das Anzugsdrehmoment dieser Verbindung in einem Bereich von 1 bis 5 Nm, bevorzugt in einem Bereich von 2 bis 4 Nm und weiter bevorzugt beträgt es 3 Nm. Es ist auch eine andere Konfiguration, beispielsweise ein Pressverband (Gabelkonusprinzip) vorstellbar. Hierbei wird die drehmomentgesteuerte Klemmkraft durch die Wahl der Passung entsprechend ersetzt.

Im Unterschied zu dem oben erläuterten ersten Ausführungsbeispiel weist die Anschlagseinrichtung 30 gemäß dem zweiten Ausführungsbeispiel einen Anschlagsabschnitt 33 auf, der in etwa gegenüberliegend der Schraubverbindung 32 und des Spaltes 36 vorgesehen ist. Hierdurch kann bei vorderseitiger Schraubverbindung der Anschlagsabschnitt 33 zur Rückseite des Fahrrads hin orientiert ausgerichtet werden, was weiter unten näher erläutert wird.

Der Anschlagsabschnitt 33 ist vorzugsweise als verlängertes Element des Befestigungsabschnitts bzw. Klemmabschnitts 31 ausgebildet und kann sich auch über dem konischen Schaftabschnitt bei einer Befestigung an dem zylindrischen Abschnitt 5 des Schaftes 3 der Radführungseinrichtung bzw. der Fahrradgabel 2 befinden, wie in Figur 15 ersichtlich ist. Die Anschlagseinrichtung 30 weist hierfür eine entsprechend geeignete geometrische, beispielsweise nach vorne gezogene Form auf. Dadurch kann die Längserstreckung der Anschlagsflächen 34, 35 entsprechend ausgedehnt werden, um im Falle einer mehrstufigen Ausbildung eine entsprechende Vielzahl an Anschlagsflächen 34, 35 mit sich unterscheidenden Breitenabmessungen zum Einstellen unterschiedlicher Lenkeinschlagswinkel zu gewährleisten. Aufgrund der in Längsrichtung verlängerten Ausgestaltung des Anschlagsabschnitts 33 auch über den konischen Schaftabschnitt 4 des Schafts 3 der Fahrradgabel 2 wird zudem die Möglichkeit geschaffen, in Längserstreckung neben mehrstufigen auch mehrere Anformungen mit unterschiedlichen Breitenabmessungen vorzusehen, sodass mittels einer Anschlagseinrichtung mehrere Lenkeinschlagwinkelbegrenzungen eingestellt werden können.

Figur 15 zeigt hierbei die Anbringung der Anschlagseinrichtung 30 gemäß dem zweiten bevorzugten Ausführungsbeispiel an einem zugeordneten Schaft 3 der Gabel 2, wobei Figur 15 eine Ansicht in Richtung der Fahrradvorderseite darstellt derart, dass die Anschlagseinrichtung 30 zur Rückseite des Fahrrads hin ausgerichtet ist.

Der Klemmabschnitt 31 ist für einen geeigneten Energieabbau im Falle einer rotatorischen Krafteinwirkung mittels eines vorbestimmten Anzugsdrehmomentes der Schraubverbindung 32 mit einer vorbestimmten Reibschlusskraft an dem zugeordneten Abschnitt des Schaftes 3 angebracht, wie oben bereits erläutert wurde. Vorzugsweise ist bei einer derartigen reibkraftschlüssigen Verbindung ein maximal übertragbares Drehmoment bzw. ein Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen. Dies dient dem vorteilhaften Energieabbau zur Verhinderung etwaiger Schäden der Bauteile. Vorliegende Werte und Wertebereiche sind lediglich als ungefähre Angaben zu verstehen, da das maximal übertragbare Drehmoment von mehreren Faktoren abhängt, wie beispielsweise dem Reibwert der jeweils verwendeten Reibpaarung.

Wie in den Figuren 12 bis 15 ferner ersichtlich ist, weist die Anschlagseinrichtung 30 gemäß dem in den Figuren 12 bis 15 dargestellten zweiten Ausführungsbeispiel eine Anformung 37 an dem Anschlagsabschnitt 33 auf, welche eine rechtsseitige erste Anschlagsfläche 34 und eine linksseitige zweite Anschlagsfläche 35 umfasst, welche jeweils seitlich an der Anformung 37 ausgerichtet sind. Über eine entsprechende Ausgestaltung der Breitenerstreckung sowie der vertikalen Erstreckung der Anformung 37 in Verbindung mit entsprechend ausgestalteten Gegenanschlagselementen 21, 22 kann wiederum ein gewünschter Lenkeinschlagswinkel erreicht werden.

Es ist ferner auch vorstellbar, dass anstelle einer Anformung 37 auch mehrere Anformungen, beispielsweise jeweils in Längsrichtung an unterschiedlichen Positionen , mit jeweils unterschiedlichen Breitenabmessungen vorgesehen sein können, sodass durch eine entsprechende Positionierung der Anschlagseinrichtung 30 in vertikaler Richtung am Schaft 3 die jeweils gewünschten Anschlagsflächen in Anlage mit den zugeordneten Gegenanschlagselementen für eine Einstellung eines gewünschten Lenkeinschlagwinkels in Anlage gelangen bei entsprechendem Lenkeinschlag.

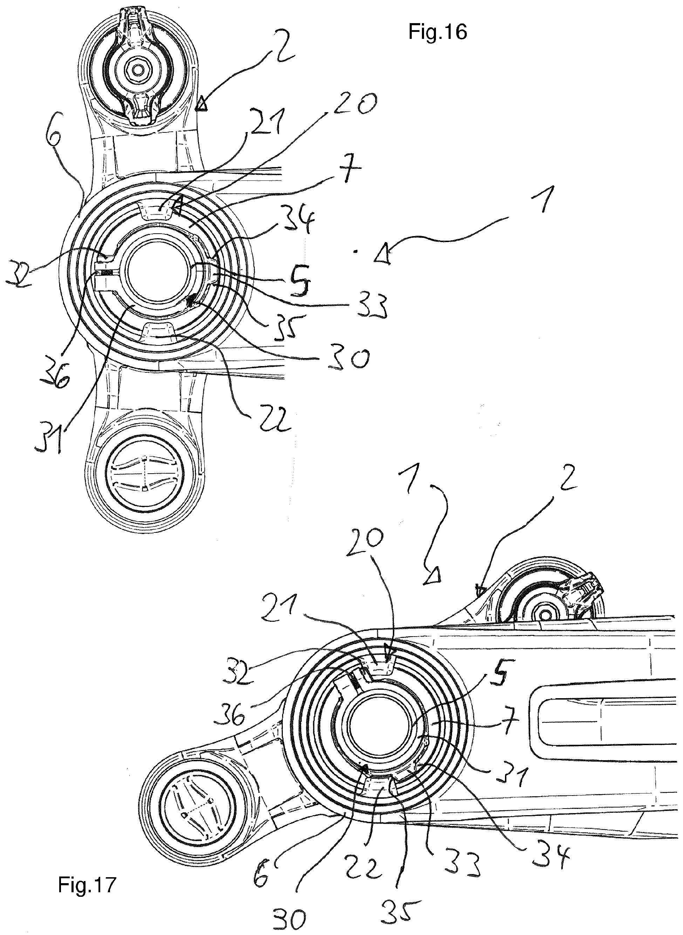

Im Folgenden wird unter Bezugnahme auf die Figuren 16 und 17 das Wirkprinzip des Systems gemäß dem zweiten bevorzugten Ausführungsbeispiel näher erläutert. Dabei zeigt Figur 16 eine Draufsicht auf ein System 1 bei einer gerade ausgerichteten Radführungseinrichtung 2 und Figur 17 eine Draufsicht auf ein System 1 mit einer nach rechts eingeschlagenen Radführungseinrichtung 2.

Wie in den Figuren 16 und 17 ersichtlich ist, gelangt bei einem Lenkeinschlag nach rechts beispielhaft die zweite Anschlagsfläche 35 der Anformung 37 in Anlage mit dem zweiten Gegenanschlagselement 22. Somit kann wiederum durch eine entsprechende Auswahl, Ausgestaltung und Positionierung der ersten und zweiten Gegenanschlagselemente 21, 22 sowie der Anschlagseinrichtung 30 mit entsprechenden Anformungen 37 und Anschlagsflächen 34, 35 ein vorbestimmter Lenkeinschlagwinkel erreicht werden.

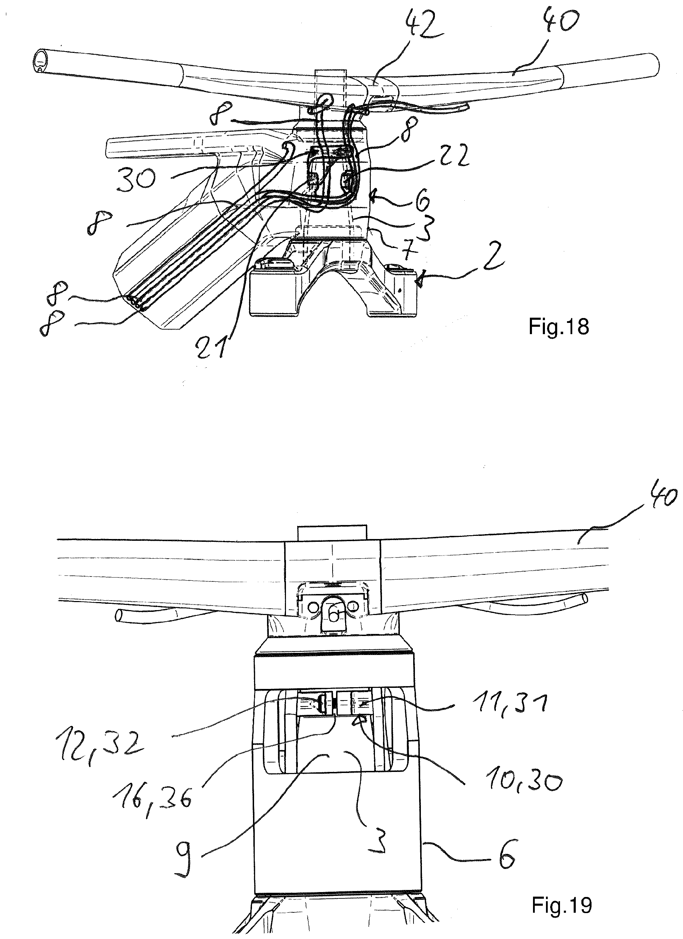

Figur 18 illustriert eine bevorzugte Kabelführung der Kabel 8 unter Verwendung einer Anschlagseinrichtung 30 gemäß dem zweiten bevorzugten Ausführungsbeispiel der vorliegenden Erfindung. Wie in Figur 18 ersichtlich ist, können die Kabel aufgrund der zur Rückseite des Fahrrads ausgerichteten Anschlagseinrichtung 30 zunächst von oben aus dem Lenker 40 und/oder dem Vorbau 42 nach vorne in das Steuerrohr 7 bzw. den Aufnahmebereich 7 des Rahmenabschnitts 6 und nach unten um die ersten und zweiten Gegenanschlagselemente 21, 22 herum geführt werden. Bei jeder Lenkbewegung kommt es zu einer Relativbewegung der Kabel 8, die am Lenker 40 befestigt sind. Je nach Lenkeinschlagwinkel beträgt diese Relativbewegung ca. 0-5 cm. Diese Relativbewegung kann zu Beschädigungen an den Kabeln 8 selbst und/oder des Unterrohrs führen. Dieses Szenario lässt sich somit ohne zusätzliche konstruktive Maßnahme verhindern, da die von oben in das Steuerrohr 6 verlaufenden Kabel 8 nach vorne in das Steuerrohr 6, um die Gegenanschlagselemente 21, 22 herum und unterhalb der Gegenanschlagselemente 21, 22 in das Unterrohr 6 vorteilhaft führbar sind.

Die gemäß dem ersten Ausführungsbeispiel genannten Materialien sind analog auf das zweite beschriebene Ausführungsbeispiel anwendbar. Weitere allgemeine Ausführungen zum ersten Ausführungsbeispiel sollen ebenfalls analog auf das zweite Ausführungsbeispiel anwendbar sein, sofern das zweite Ausführungsbeispiel betreffend nichts Gegenteiliges angegeben ist.

Somit schafft das erfindungsgemäße System 1 eine Begrenzung eines gewünschten Lenkeinschlagwinkels durch eine entsprechende Ausgestaltung und Anbringung einer Gegenanschlagseinrichtung 20 am Rahmen sowie einer entsprechenden Ausgestaltung und Positionierung einer zugeordneten Anschlagseinrichtung 10 bzw. 30. Selbst eine Abänderung einer zunächst eingestellten ersten Begrenzung des Lenkeinschlagwinkels kann durch beispielsweise einen Austausch der Anschlagseinrichtung 10 bzw. 30 oder eine entsprechend in vertikaler Richtung geänderte Positionierung der Anschlagseinrichtung 10 bzw. 30 auf einfache und kostengünstige Weise erfolgen. Im Falle eines aufgrund eines Unfalls oder einer zu starken Krafteinwirkung erfolgten Verdrehung der Anschlagseinrichtung kann diese auf einfache Weise wieder in eine ordnungsgemäße Position zurückgestellt werden. Eine Beschädigung bestehender Komponenten wird dabei vorteilhaft vermieden. Sollte eine Beschädigung beispielsweise der Anschlagseinrichtung 10 bzw. 30 auftreten, kann diese auf einfache und kostengünstige Weise ersetzt werden.

Vorliegend wird auch ein System 1 zum Begrenzen des Lenkeinschlagwinkels geschaffen, welches vorteilhaft eine strikte Trennung des Lenkanschlagsystems 1 und etwaiger Gabel-Lager und Gabel-Lagerschalen bzw. Gabel-Lagersitze gewährleistet, sodass vorteilhaft das Lenkeinschlagsystem 1 gegenüber Umwelteinflüssen bestens abgedichtet werden kann.

Vorteilhaft ist das vorliegende System 1 derart ausgebildet, dass die Lenkeinschlagwinkel auf einen Winkelbereich von in etwa 25° bis 85°, bevorzugt auf einen Winkelbereich von in etwa 60° bis 80° und weiter bevorzugt auf einen Winkelbereich von in etwa 65° bis 75°, je Lenkseite eingestellt sind. Es ist für einen Fachmann offensichtlich, dass auch andere Winkelbereiche je nach Anwendungsfall und Kundenwünschen vorstellbar sind.

Figur 19 illustriert eine Ansicht in Richtung der Fahrradrückseite auf den Rahmenabschnitt 6 gemäß einem Ausführungsbeispiel der vorliegenden Erfindung, wobei zu der Vorderseite des Fahrrads hin gerichtet eine Revisionsöffnung 9 derart vorgesehen ist, dass ein Benutzer auf einfache Weise die Schraubverbindung 12, 32 betätigen und die Anschlagseinrichtung 10, 30 bei Bedarf entsprechend positionieren und/oder ersetzen kann. Dadurch wird einem Benutzer oder Monteur die Möglichkeit geschaffen, entsprechende Umbaumaßnahmen auf einfache und kostengünstige Weise vorzunehmen. Vorteilhaft ist die Revisionsöffnung 9 durch einen entsprechenden abnehmbaren oder aufklappbaren Deckel oder dergleichen insbesondere zum Schutz gegenüber Umwelteinflüssen abgedichtet.

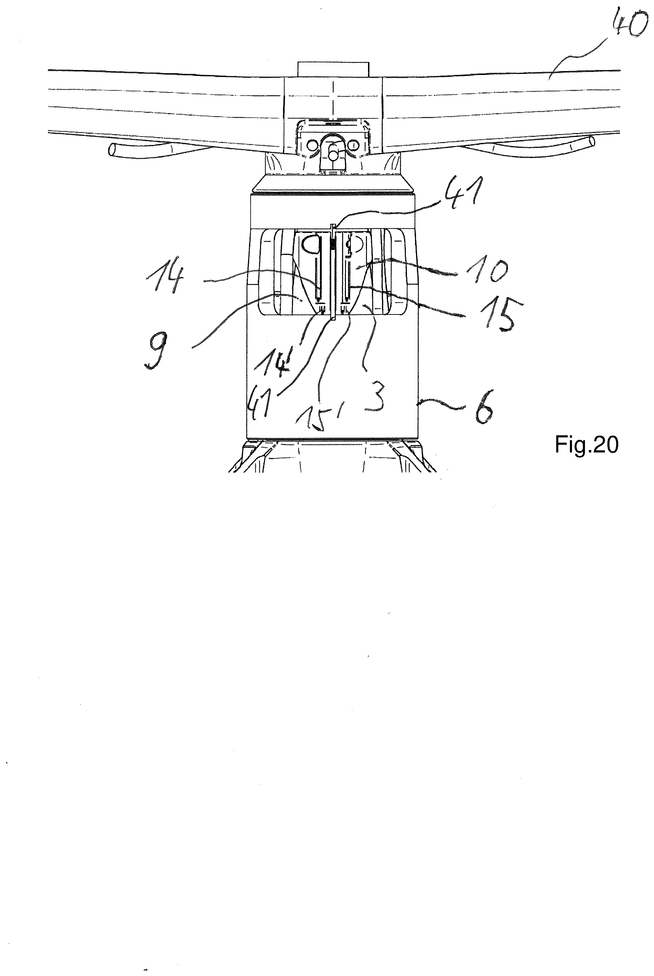

Figur 20 illustriert eine Ansicht in Richtung der Fahrradrückseite auf den Rahmenabschnitt 6 gemäß einem weiteren Ausführungsbeispiel der vorliegenden Erfindung, wobei zu der Vorderseite des Fahrrads hin gerichtet wiederum die Revisionsöffnung 9 vorgesehen ist. Gemäß diesem Ausführungsbeispiel ist im Bereich der Revisionsöffnung 9 vorzugsweise eine oder mehrere Ausrichtmarkierungen 41, beispielsweise in Form von zwei mittig und in vertikaler Richtung gegenüberliegenden Einkerbungen 41, vorgesehen, sodass eine Neuausrichtung der Anschlagseinrichtung 10 auf einfache Weise dadurch bewerkstelligt werden kann, dass der Spalt 16 der Anschlagseinrichtung 10 in Flucht mit den beiden gegenüberliegenden Einkerbungen 41 gebracht wird.

Das vorliegende System schafft vorteilhaft eine strikte Trennung von Lenkanschlagssystem und Lagerschalen bzw. Lagersitzen im Bereich des Steuerrohrs und kann daher sehr gut gegenüber Umwelteinflüssen abgedichtet werden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise ist bezüglich der Anschlagseinrichtung und der Gegenanschlagseinrichtung auch eine kinematische Umkehr dahingehend vorstellbar, dass rahmenseitig die Anschlagseinrichtung mit einem Anschlagsabschnitt, beispielsweise als formschlüssig angebrachtes Inlay, und gabelschaftseitig die Gegenanschlagseinrichtung, beispielsweise als stoffschlüssig angebrachte Einrichtung,vorgesehen sind. Hierdurch ist das funktionsgleiche Wirkprinzip gewährleistet und soll im vorliegenden Schutzumfang mit umfasst sein. Auch kann dem jeweiligen Anwendungsfall angepasst die Anschlagseinrichtung ein erstes und ein zweites Anschlagselement und die Gegenanschlagseinrichtung lediglich ein Gegenanschlagselement aufweisen, und umgekehrt.

Beispielsweise kann die Anschlagseinrichtung anstatt als separates Bauteil auch direkt an einem entsprechenden Abschnitt des Schaftes der Radführungseinrichtung als integraler Bestandteil hiervon angeformt und somit direkt in den Schaft integriert ausgebildet sein.

Auch können mehrere sich in den geometrischen Abmessungen und in der vertikalen und/oder horizontalen Orientierung unterscheidende Nocken als Anschlagsabschnitte bzw. Gegenanschlagselemente vorgesehen werden.

### BEZUGSZEICHENLISTE

- 1: System
- 2: Radführungseinrichtung/Gabel
- 3: Schaft
- 4: konischer Schaftabschnitt
- 5: zylindrischer Schaftabschnitt
- 6: Rahmenabschnitt
- 7: Aufnahmebereich
- 8: Kabel
- 9: Revisionsöffnung
- 10: Anschlagseinrichtung
- 11: Befestigungsabschnitt/Klemmabschnitt
- 12: Schraubverbindung
- 13: Anschlagsabschnitt
- 14, 14': erster Steg
- 15, 15': zweiter Steg
- 16: Spalt
- 17, 17': Winkelanzeige
- 18: erste Anschlagsfläche
- 19: zweite Anschlagsfläche
- 20: Gegenanschlagseinrichtung
- 21, 21': erstes Gegenanschlagselement
- 22, 22': zweites Gegenanschlagselement
- 30: Anschlagseinrichtung
- 31: Befestigungsabschnitt/Klemmabschnitt
- 32: Schraubverbindung
- 33: Anschlagsabschnitt
- 34: erste Anschlagsfläche
- 35: zweite Anschlagsfläche
- 36: Spalt
- 37: Anformung
- 40: Lenker
- 41: Ausrichtmarkierungen
- 42: Vorbau

## Patentansprüche

1. System (1) zum Begrenzen des Lenkeinschlagwinkels eines Fahrrads zwischen einer ersten Lenkeinschlag-Endposition und einer zweiten Lenkeinschlag-Endposition, mit:
einer Radführungseinrichtung (2), welche einen Schaft (3) aufweist, der eine Bewegung des Lenkers auf das Vorderrad des Fahrrads überträgt;
einem Rahmenabschnitt (6) des Fahrrads, welcher einen Aufnahmebereich (7) für eine um die Längsachse des Schaftes (3) drehbare Aufnahme zumindest eines Abschnitts des Schaftes (3) der Radführungseinrichtung (2) aufweist;
einer Anschlagseinrichtung (10; 30), welche an dem in dem Aufnahmebereich (7) des Rahmenabschnitts (6) aufgenommenen Abschnitt des Schaftes (3) der Radführungseinrichtung (2) angebracht ist und zumindest einen Anschlagsabschnitt (13; 33) aufweist; und
einer Gegenanschlagseinrichtung (20), welche zumindest ein Gegenanschlagselement (21; 22) aufweist, welches als fester Bestandteil des Rahmenabschnitts (6) im Inneren des Aufnahmebereichs (7) des Rahmenabschnitts (6) derart vorgesehen ist, dass in den jeweiligen Lenkeinschlag-Endpositionen jeweils ein Anschlagsabschnitt (13; 33) der Anschlagseinrichtung (10; 30) mit einem zugeordneten Gegenanschlagselement (21; 22) der Gegenanschlagseinrichtung (20) in den Lenkeinschlagswinkel begrenzender Weise in Anlage gelangt;
**dadurch gekennzeichnet, dass** der Rahmenabschnitt (6) im Bereich des Aufnahmebereiches (7) eine Revisionsöffnung (9) aufweist, welche einen Zugang von außen zu der Anschlagseinrichtung (10; 30) ermöglicht.

2. System (1) nach Anspruch 1,
**dadurch gekennzeichnet, dass** ein erstes Gegenanschlagselement (21) und ein zweites Gegenanschlagselement (22) in Umfangsrichtung voneinander beabstandet vorgesehen und als integraler Bestandteil des Rahmenabschnitts (6) im Inneren des Aufnahmebereiches (7) des Rahmenabschnitts (6) angeformt sind.

3. System (1) nach Anspruch 1 oder 2,
**dadurch gekennzeichnet, dass** das zumindest eine Gegenanschlagselement (21; 22) stoffschlüssig und/oder formschlüssig mit dem Rahmenabschnitt (6) ausgebildet ist.

4. System (1) nach wenigstens einem der Ansprüche 1 bis 3,
**dadurch gekennzeichnet, dass** mehrere Paare an ersten und zweiten Gegenanschlagselementen (21, 22; 21'; 22') an in Längsrichtung des Aufnahmebereiches (7) des Rahmenabschnitts (6) unterschiedlichen Positionen vorgesehen sind, wobei die in Umfangsrichtung voneinander vorgesehene Beabstandung eines jeden Paares (21, 22; 21', 22') zum Gewährleisten unterschiedlicher Lenkeinschlagwinkel an den jeweiligen vertikalen Anordnungspositionen unterschiedlich ausgebildet ist.

5. System (1) nach wenigstens einem der Ansprüche 1 bis 3,
**dadurch gekennzeichnet, dass** das zumindest eine Gegenanschlagselement (21; 22) in Längsrichtung des Aufnahmebereiches (7) des Rahmenabschnitts (6) gesehen derart stufenartig ausgebildet ist, dass zum Gewährleisten unterschiedlicher Lenkeinschlagwinkel Bereiche mit sich in Umfangsrichtung voneinander unterscheidenden Beabstandungen vorgesehen sind, wobei vorzugsweise Winkelanzeigen (17, 17') an den entsprechenden Bereichen vorgesehen sind.

6. System (1) nach wenigstens einem der vorhergehenden Ansprüche,
**dadurch gekennzeichnet, dass** das zumindest eine Gegenanschlagselement (21; 22) aus dem Material des Rahmenabschnitts (6) oder einem sich von dem Rahmenabschnitt (6) unterscheidenden Material ausgebildet ist, insbesondere aus einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen.

7. System (1) nach wenigstens einem der Ansprüche 1 bis 5,
**dadurch gekennzeichnet, dass** das zumindest eine Gegenanschlagselement (21; 22) aus einem stoßdämpfenden Material ausgebildet ist.

8. System (1) nach wenigstens einem der vorhergehenden Ansprüche,
**dadurch gekennzeichnet, dass** die Anschlagseinrichtung (10; 30) als einteiliges oder mehrteiliges Bauteil hergestellt ist, insbesondere aus einem Faserverbundwerkstoff (vorzugsweise Kohlenstofffaserverstärkter Kunststoff, Glasfaserverstärkter Kunststoff, Aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen.

9. System (1) nach wenigstens einem der vorhergehenden Ansprüche,
**dadurch gekennzeichnet, dass** die Anschlagseinrichtung (10; 30) einen Befestigungsabschnitt (11; 31) aufweist, welcher als mittels einer reibschlüssigen Verbindung, vorzugsweise einer Schraubverbindung (12; 32), klemmbarer Klemmabschnitt ausgebildet ist, vorzugsweise für eine reibschlüssige Klemmung an einem zylindrischen Abschnitt (5) des Schaftes (3), wobei vorzugsweise das Anzugsdrehmoment dieser Verbindung in einem Bereich von 1 bis 5 Nm, bevorzugt in einem Bereich von 2 bis 4 Nm liegt und weiter bevorzugt 3 Nm beträgt.

10. System (1) nach Anspruch 9,
**dadurch gekennzeichnet, dass** der Klemmabschnitt (11; 31) für einen geeigneten Energieabbau im Falle einer rotatorischen Krafteinwirkung mittels eines vorbestimmten Anzugsdrehmomentes der Schraubverbindung (12; 32) mit einer vorbestimmten Reibschlusskraft an dem zugeordneten Abschnitt des Schaftes (3) angebracht ist, wobei vorzugsweise bei einer derartigen reibkraftschlüssigen Verbindung ein maximal übertragbares Drehmoment bzw. ein Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen ist.

11. System (1) nach wenigstens einem der Ansprüche 9 oder 10,
**dadurch gekennzeichnet, dass** der Anschlagsabschnitt (13; 33) der Anschlagseinrichtung (10; 30) als in Längsrichtung der Anschlagseinrichtung (10; 30) verlängertes Element des Klemmabschnitts (11; 31) ausgebildet ist.

12. System (1) nach wenigstens einem der Ansprüche 9 bis 11,
**dadurch gekennzeichnet, dass** der Anschlagsabschnitt (13) der Anschlagseinrichtung (10) im Bereich der Schraubverbindung (12) vorgesehen ist, wobei die Anschlagseinrichtung (10) derart an dem Schaft (3) angebracht ist, dass die Anschlagseinrichtung (10) zur Vorderseite des Fahrrads orientiert vorgesehen ist.

13. System (1) nach wenigstens einem der Ansprüche 9 bis 12,
**dadurch gekennzeichnet, dass** der Anschlagsabschnitt (13) als zwei sich in Längsrichtung erstreckende und einen Spalt (16) definierende Stege (14, 15) ausgebildet ist, wobei der Spalt (16) in Verbindung mit der Schraubverbindung (12) eine Veränderung des Durchmessers des Befestigungsabschnitts (11) zum Gewährleisten einer vorbestimmten Klemmkraft bewirkt.

14. System (1) nach Anspruch 13,
**dadurch gekennzeichnet, dass** die Stege (14, 15) des Anschlagsabschnitts (13) für eine variable Einstellung des Lenkeinschlagwinkels in Längsrichtung gesehen Abschnitte mit unterschiedlichen, beispielsweise mehrstufigen, Stegbreiten aufweisen.

15. System (1) nach wenigstens einem der vorhergehenden Ansprüche,
**dadurch gekennzeichnet, dass** von oben in den Aufnahmebereich (7) des Rahmenabschnitts (6) verlaufende Kabel (8) oberhalb des ersten und/oder zweiten Gegenanschlagselementes (21, 22) in einen rückwärts gerichteten Rahmenabschnitt des Fahrrads geführt sind.

16. System (1) nach wenigstens einem der vorhergehenden Ansprüche,
**dadurch gekennzeichnet, dass** der Anschlagsabschnitt (33) der Anschlagseinrichtung (30) gegenüberliegend der Schraubverbindung (32) vorgesehen ist, wobei die Anschlagseinrichtung (30) derart am Schaft (3) angebracht ist, dass die Anschlagseinrichtung (30) zur Rückseite des Fahrrads orientiert vorgesehen ist.

17. System (1) nach wenigstens einem der Ansprüche 1 bis 11 oder 16,
**dadurch gekennzeichnet, dass** der Anschlagsabschnitt (33) eine oder mehrere Anformungen mit unterschiedlich ausgebildeten Anformungsbreiten aufweist oder stufenartig mit in Querrichtung sich unterschiedlich erstreckenden Anschlagsflächen (34, 35) ausgebildet ist.

18. System (1) nach wenigstens einem der Ansprüche 1 bis 11, 16 oder 17,
**dadurch gekennzeichnet, dass** von oben in den vorderen Aufnahmebereich (7) des Rahmenabschnitts (6) verlaufende Kabel (8) unterhalb des ersten und/oder zweiten Gegenanschlagselements (21, 22) in einen rückwärts gerichteten Rahmenabschnitt des Fahrrads geführt sind.

19. System (1) nach wenigstens einem der vorhergehenden Ansprüche,
**dadurch gekennzeichnet, dass** das System (1) derart ausgebildet ist, den Lenkeinschlagwinkel auf einen Winkelbereich von in etwa 25° bis 85°, bevorzugt auf einen Winkelbereich von in etwa 60° bis 80°, und weiter bevorzugt auf einen Winkelbereich von in etwa 65° bis 75° je Lenkseite zu begrenzen.

20. System (1) nach wenigstens einem der vorhergehenden Ansprüche,
**dadurch gekennzeichnet, dass** die Revisionsöffnung (9) mittels eines Deckels verschließbar ist.

21. System (1) nach wenigstens einem der vorhergehenden Ansprüche,
**dadurch gekennzeichnet, dass** im Bereich der Revisionsöffnung (9) mindestens eine Ausrichteinrichtung vorgesehen ist, vorzugsweise in Form einer Ausrichtmarkierung (41), beispielsweise in Form zweier mittig und in vertikaler Richtung gegenüberliegend angeordneter Einkerbungen.

22. Fahrrad, welches ein System (1) nach wenigstens einem der vorhergehenden Ansprüche aufweist.

## Claims

1. System (1) for limiting the steering angle of a bicycle between a first steering end position and a second steering end position, having:
a wheel guiding device (2), which has a shaft (3), which transmits a movement of the handlebars to the front wheel of the bicycle;
a frame section (6) of the bicycle, which has a receiving region (7) for receiving, in a rotating manner about the longitudinal axis of the shaft (3), at least a section of the shaft (3) of the wheel guiding device (2);
a stop device (10; 30), which is attached to the section of the shaft (3) of the wheel guiding device (2) that is received in the receiving region (7) of the frame section (6) and has at least one stop section (13; 33); and
a counter-stop device (20), which has at least one counter-stop element (21; 22), which is provided as an integral part of the frame section (6) inside the receiving region (7) of the frame section (6) in such a way that, in the respective steering end positions, a stop section (13; 33) of the stop device (10; 30) respectively comes into contact with an associated counter-stop element (21; 22) of the counter-stop device (20) in a manner that limits the steering angle;
**characterised in that** the frame section (6) has an inspection opening (9) in the region of the receiving region (7), which enables access from the outside to the stop device (10; 30).

2. System (1) according to claim 1,
**characterised in that** a first counter-stop element (21) and a second counter-stop element (22) are provided spaced apart from one another in the circumferential direction and are formed as an integral part of the frame section (6) inside the receiving region (7) of the frame section (6).

3. System (1) according to claim 1 or 2,
**characterised in that** the at least one counter-stop element (21; 22) is formed in a manner that provides a material and/or form-fitting connection with the frame section (6).

4. System (1) according to at least one of claims 1 to 3,
**characterised in that** a plurality of pairs of first and second counter-stop elements (21, 22; 21'; 22') are provided at different positions in the longitudinal direction of the receiving region (7) of the frame section (6), wherein the spacing provided in the circumferential direction between the elements of each pair (21, 22; 21', 22') is different to ensure different steering angles at the respective vertical arrangement positions.

5. System (1) according to at least one of claims 1 to 3,
**characterised in that** the at least one counter-stop element (21; 22) is designed in a stepped manner as viewed in the longitudinal direction of the receiving region (7) of the frame section (6) in such a way that, in order to ensure different steering angles, regions are provided with different spacings from one another in the circumferential direction, wherein angle indicators (17, 17') are preferably provided at the corresponding regions.

6. System (1) according to at least one of the preceding claims,
**characterised in that** the at least one counter-stop element (21; 22) is made from the material of the frame section (6) or from a different material from the frame section (6), in particular from a fibre composite material (preferably carbon fibre reinforced plastic, glass fibre reinforced plastic, aramid fibre reinforced plastic), a metallic material (preferably an aluminium alloy), a thermoplastic material (preferably PP, PE, PA66, ABS), an elastomer (preferably natural/synthetic rubber) or the like.

7. System (1) according to at least one of claims 1 to 5,
**characterised in that** the at least one counter-stop element (21; 22) is made from a shock-absorbing material.

8. System (1) according to at least one of the preceding claims,
**characterised in that** the stop device (10; 30) is made as a single-piece or multi-part component, in particular from a fibre composite material (preferably carbon fibre reinforced plastic, glass fibre reinforced plastic, aramid fibre reinforced plastic), a metallic material (preferably an aluminium alloy), a thermoplastic material (preferably PP, PE, PA66, ABS), an elastomer (preferably natural/synthetic rubber) or the like.

9. System (1) according to at least one of the preceding claims,
**characterised in that** the stop device (10; 30) has a fastening section (11; 31), which is designed as a clamping section that can be clamped by means of a frictional connection, preferably a screw connection (12; 32), preferably for frictional clamping to a cylindrical section (5) of the shaft (3), wherein the tightening torque of this connection is preferably in a range of 1 to 5 Nm, preferably in a range of 2 to 4 Nm and further preferably 3 Nm.

10. System (1) according to claim 9,
**characterised in that** the clamping section (11; 31) is attached to the associated section of the shaft (3) with a predetermined frictional force by means of a predetermined tightening torque of the screw connection (12; 32), for suitable energy dissipation in the event of a rotational force being applied, wherein, in such a frictional connection, a maximum transmissible torque or breakaway torque is preferably provided within a range of preferably 4 to 90 Nm, preferably in a range of 10 to 70 Nm, and further preferably in a range of 15 to 50 Nm.

11. System (1) according to at least one of claims 9 or 10,
**characterised in that** the stop section (13; 33) of the stop device (10; 30) is designed as an element of the clamping section (11; 31) extending in the longitudinal direction of the stop device (10; 30).

12. System (1) according to at least one of claims 9 to 11,
**characterised in that** the stop section (13) of the stop device (10) is provided in the region of the screw connection (12), wherein the stop device (10) is attached to the shaft (3) in such a way that the stop device (10) is provided oriented towards the front side of the bicycle.

13. System (1) according to at least one of claims 9 to 12,
**characterised in that** the stop section (13) is designed as two webs (14, 15) extending in the longitudinal direction and defining a gap (16), wherein the gap (16) in conjunction with the screw connection (12) brings about a change in the diameter of the fastening section (11) in order to ensure a predetermined clamping force.

14. System (1) according to claim 13,
**characterised in that** the webs (14, 15) of the stop section (13) have sections with different, for example multi-stage, web widths, as seen in the longitudinal direction, for variable adjustment of the steering angle.

15. System (1) according to at least one of the preceding claims,
**characterised in that** cables (8) running from above into the receiving region (7) of the frame section (6) are routed above the first and/or second counter-stop element (21, 22) into a backwards-directed frame section of the bicycle.

16. System (1) according to at least one of the preceding claims,
**characterised in that** the stop section (33) of the stop device (30) is provided opposite the screw connection (32), wherein the stop device (30) is attached to the shaft (3) in such a way that the stop device (30) is provided oriented towards the rear side of the bicycle.

17. System (1) according to at least one of claims 1 to 11 or 16,
**characterised in that** the stop section (33) has one or more integrally formed projections with different projection widths or is designed in a stepped manner with stop surfaces (34, 35) extending to different extents in the transverse direction.

18. System (1) according to at least one of claims 1 to 11, 16 or 17,
**characterised in that** cables (8) running from above into the front receiving region (7) of the frame section (6) are routed below the first and/or second counter-stop element (21, 22) into a backwards-directed frame section of the bicycle.

19. System (1) according to at least one of the preceding claims,
**characterised in that** the system (1) is designed in a such a way as to limit the steering angle to an angular range of around 25° to 85°, preferably to an angular range of around 60° to 80°, and further preferably to an angular range of around 65° to 75° on each steering side.

20. System (1) according to at least one of the preceding claims,
**characterised in that** the inspection opening (9) can be closed by means of a cover.

21. System (1) according to at least one of the preceding claims,
**characterised in that** at least one alignment device is provided in the region of the inspection opening (9), preferably in the form of an alignment mark (41), for example in the form of two notches arranged opposite one another in the centre and in a vertical direction.

22. Bicycle, which has a system (1) according to at least one of the preceding claims.

## Revendications

1. Système (1) destiné à limiter l'angle de braquage d'une bicyclette entre une première position extrême de braquage et une deuxième position extrême de braquage, comprenant :
un dispositif de guidage de roue (2) présentant une tige (3) qui transmet un mouvement du guidon à la roue avant de la bicyclette ;
une partie cadre (6) de la bicyclette, qui présente une zone de réception (7) destinée à recevoir, de manière rotative autour de l'axe longitudinal de la tige (3), au moins une partie de la tige (3) du dispositif de guidage de roue (2) ;
un dispositif de butée (10 ; 30) qui est monté sur la partie de la tige (3) du dispositif de guidage de roue (2) reçue dans la zone de réception (7) de la partie cadre (6) et qui présente au moins une partie butée (13 ; 33) ; et
un dispositif de contre-butée (20) qui présente au moins un élément de contre-butée (21 ; 22), lequel est prévu en tant que partie intégrante de la partie cadre (6) à l'intérieur de la zone de réception (7) de la partie cadre (6), de telle sorte que, dans les positions extrêmes de braquage respectives, une partie butée (13 ; 33) respective du dispositif de butée (10 ; 30) vienne en appui contre un élément de contre-butée associé (21 ; 22) du dispositif de contre-butée (20), de manière à limiter l'angle de braquage ;
**caractérisé en ce que** la partie cadre (6) présente, au niveau de la zone de réception (7), une ouverture d'inspection (9) qui permet un accès depuis l'extérieur au dispositif de butée (10 ; 30).

2. Système (1) selon la revendication 1,
**caractérisé en ce qu'**un premier élément de contre-butée (21) et un deuxième élément de contre-butée (22) sont prévus à distance l'un de l'autre dans la direction circonférentielle et sont formés en tant que partie intégrante de la partie cadre (6) à l'intérieur de la zone de réception (7) de la partie cadre (6).

3. Système (1) selon la revendication 1 ou 2,
**caractérisé en ce que** ledit au moins un élément de contre-butée (21 ; 22) est réalisé par liaison de matière et/ou par complémentarité de forme avec la partie cadre (6).

4. Système (1) selon au moins l'une des revendications 1 à 3,
**caractérisé en ce que** plusieurs paires de premiers et deuxièmes éléments de contre-butée (21, 22 ; 21' ; 22') sont prévues à des positions différentes dans la direction longitudinale de la zone de réception (7) de la partie cadre (6), l'espacement prévu dans la direction circonférentielle entre chaque paire (21, 22 ; 21', 22') étant différent aux positions d'agencement verticales respectives afin de garantir des angles de braquage différents.

5. Système (1) selon au moins l'une des revendications 1 à 3,
**caractérisé en ce que** ledit au moins un élément de contre-butée (21 ; 22) est réalisé de manière étagée, vu dans la direction longitudinale de la zone de réception (7) de la partie cadre (6), de telle sorte que, pour garantir différents angles de braquage, des zones présentant des espacements différents les uns des autres dans la direction circonférentielle sont prévues, des indicateurs d'angle (17, 17') étant de préférence prévus au niveau des zones correspondantes.

6. Système (1) selon au moins l'une des revendications précédentes,
**caractérisé en ce que** ledit au moins un élément de contre-butée (21 ; 22) est réalisé dans le même matériau que la partie cadre (6) ou dans un matériau différent de celui de la partie cadre (6), en particulier dans un matériau composite renforcé de fibres (de préférence une matière plastique renforcée de fibres de carbone, une matière plastique renforcée de fibres de verre, une matière plastique renforcée de fibres d'aramide), un matériau métallique (de préférence un alliage d'aluminium), une matière thermoplastique (de préférence du PP, du PE, du PA66, de l'ABS), un élastomère (de préférence du caoutchouc naturel/synthétique) ou similaire.

7. Système (1) selon au moins l'une des revendications 1 à 5,
**caractérisé en ce que** ledit au moins un élément de contre-butée (21 ; 22) est réalisé dans un matériau amortissant les chocs.

8. Système (1) selon au moins l'une des revendications précédentes,
**caractérisé en ce que** le dispositif de butée (10 ; 30) est fabriqué sous la forme d'un composant d'une seule pièce ou en plusieurs parties, en particulier dans un matériau composite renforcé de fibres (de préférence une matière plastique renforcée de fibres de carbone, une matière plastique renforcée de fibres de verre, une matière plastique renforcée de fibres d'aramide), un matériau métallique (de préférence un alliage d'aluminium), une matière thermoplastique (de préférence du PP, du PE, du PA66, de l'ABS), un élastomère (de préférence du caoutchouc naturel/synthétique) ou similaire.

9. Système (1) selon au moins l'une des revendications précédentes,
**caractérisé en ce que** le dispositif de butée (10 ; 30) présente une partie de fixation (11 ; 31) qui est réalisée sous la forme d'une partie de serrage pouvant être serrée au moyen d'une liaison par friction, de préférence une liaison vissée (12 ; 32), de préférence pour un serrage par friction sur une partie cylindrique (5) de la tige (3), le couple de serrage de cette liaison se situant de préférence dans une plage de 1 à 5 Nm, de préférence dans une plage de 2 à 4 Nm et, de manière encore plus préférée, étant de 3 Nm.

10. Système (1) selon la revendication 9,
**caractérisé en ce que**, pour permettre une dissipation d'énergie appropriée en cas d'application d'une force de rotation, la partie de serrage (11 ; 31) est montée au moyen d'un couple de serrage prédéterminé de la liaison vissée (12 ; 32), avec une force de friction prédéterminée sur la partie associée de la tige (3), de préférence un couple maximal transmissible ou un couple de rupture d'une telle liaison par friction étant prévu de préférence dans une plage de 4 à 90 Nm, de préférence dans une plage de 10 à 70 Nm et, de manière encore plus préférée, dans une plage de 15 à 50 Nm.

11. Système (1) selon au moins l'une des revendications 9 ou 10,
**caractérisé en ce que** la partie butée (13 ; 33) du dispositif de butée (10 ; 30) est réalisée sous la forme d'un élément de la partie de serrage (11 ; 31) prolongé dans la direction longitudinale du dispositif de butée (10 ; 30).

12. Système (1) selon au moins l'une des revendications 9 à 11,
**caractérisé en ce que** la partie butée (13) du dispositif de butée (10) est prévue dans la zone de la liaison vissée (12), le dispositif de butée (10) étant monté sur la tige (3) de telle sorte que le dispositif de butée (10) soit orienté vers l'avant de la bicyclette.

13. Système (1) selon au moins l'une des revendications 9 à 12,
**caractérisé en ce que** la partie butée (13) est réalisée sous la forme de deux nervures (14, 15) s'étendant dans la direction longitudinale et définissant une fente (16), la fente (16) provoquant, en association avec la liaison vissée (12), une modification du diamètre de la partie de fixation (11) afin de garantir une force de serrage prédéterminée.

14. Système (1) selon la revendication 13,
**caractérisé en ce que** les nervures (14, 15) de la partie butée (13) présentent, vues dans la direction longitudinale, des parties avec des largeurs de nervure différentes, par exemple à plusieurs niveaux, pour un réglage variable de l'angle de braquage.

15. Système (1) selon au moins l'une des revendications précédentes,
**caractérisé en ce que** des câbles (8) s'étendant depuis le haut dans la zone de réception (7) de la partie cadre (6) sont acheminés, au-dessus du premier et/ou du deuxième élément de contre-butée (21, 22), vers une partie cadre de la bicyclette orientée vers l'arrière.

16. Système (1) selon au moins l'une des revendications précédentes,
**caractérisé en ce que** la partie butée (33) du dispositif de butée (30) est prévue en face de la liaison vissée (32), le dispositif de butée (30) étant monté sur la tige (3) de telle sorte que le dispositif de butée (30) soit orienté vers l'arrière de la bicyclette.

17. Système (1) selon au moins l'une des revendications 1 à 11 ou 16,
**caractérisé en ce que** la partie butée (33) présente une ou plusieurs formations rapportées avec des largeurs de formation rapportée différentes, ou est réalisée de manière étagée avec des surfaces de butée (34, 35) s'étendant différemment dans la direction transversale.

18. Système (1) selon au moins l'une des revendications 1 à 11, 16 ou 17,
**caractérisé en ce que** des câbles (8) s'étendant depuis le haut dans la zone de réception avant (7) de la partie cadre (6) sont acheminés sous le premier et/ou le deuxième élément de contre-butée (21, 22) vers une partie cadre de la bicyclette orientée vers l'arrière.

19. Système (1) selon au moins l'une des revendications précédentes,
**caractérisé en ce que** le système (1) est conçu de manière à limiter l'angle de braquage à une plage angulaire d'environ 25° à 85°, de préférence à une plage angulaire d'environ 60° à 80°, et, de manière encore plus préférée, à une plage angulaire d'environ 65° à 75° de chaque côté du guidon.

20. Système (1) selon au moins l'une des revendications précédentes,
**caractérisé en ce que** l'ouverture d'inspection (9) peut être fermée au moyen d'un couvercle.

21. Système (1) selon au moins l'une des revendications précédentes,
**caractérisé en ce qu'**au moins un dispositif d'alignement est prévu dans la zone de l'ouverture d'inspection (9), de préférence sous la forme d'un repère d'alignement (41), par exemple sous la forme de deux encoches disposées au centre et en face l'une de l'autre dans la direction verticale.

22. Vélo présentant un système (1) selon au moins l'une des revendications précédentes.
